# EUROPÄISCHE PATENTSCHRIFT

(11) **EP 4 169 748 B1**
(45) Veröffentlichungstag und Bekanntmachung des Hinweises auf die Patenterteilung: **03.12.2025**
(21) Anmeldenummer: 22202521.5
(22) Anmeldetag: 19.10.2022
(51) Int. Cl.: B60D 1/06, B60R 9/06

(54) **LASTENHECKTRÄGER ZUR KOPPLUNG MIT EINER KUGELKOPF-ANHÄNGERKUPPLUNG EINES FAHRZEUGS**
LOAD REAR CARRIER FOR COUPLING WITH A BALL HITCH OF A VEHICLE
SUPPORT ARRIÈRE DE CHARGE DESTINÉ À ÊTRE COUPLÉ À UN ATTELAGE À ROTULE D'UN VÉHICULE

(30) Priorität: 19.10.2021 DE 202021105691 U
(43) Veröffentlichungstag der Anmeldung: 26.04.2023
(73) Patentinhaber: MFT Transport Systeme GmbH, 74532 Ilshofen-Großallmerspann (DE)
(72) Erfinder: BOHN, Peter, 74532 IIshofen (DE)
(74) Vertreter: Winter, Brandl - Partnerschaft mbB

(56) Entgegenhaltungen:
- WO-A1-2013/121271
- DE-A1- 10 208 163
- NL-B1- 2 017 968

## Beschreibung

Die vorliegende Offenbarung betrifft einen Lastenheckträger zur Kopplung mit einer Kugelkopf-Anhängerkupplung eines Fahrzeugs.

### Hintergrund der Offenbarung

Lastenheckträger dienen zum Transport von Lasten außerhalb eines Kraftfahrzeugs, z.B. eines Personenkraftwagens. Lastenheckträger werden dabei insbesondere zum Transport von Transportgut, insbesondere von Fahrrädern, verwendet. Lastenheckträger sind üblicherweise starre Rahmengestelle, die als Lastauflager dienen und eine (trägerseitige) Kupplung aufweisen, die mit einer fahrzeugseitigen Anhängerkupplung gekoppelt werden kann. Üblicherweise ist die fahrzeugseitige Kupplung als Kugelkopf-Anhängerkupplung ausgeführt, die einen Kupplungshals und einen Kupplungskopf aufweist. Zum Koppeln des Lastenheckträgers mit der fahrzeugseitigen Kupplung in einen Kupplungszustand wird das Rahmengestell des Lastenheckträgers bei geöffneter trägerseitiger Kupplung auf einen Kugelkopf der fahrzeugseitigen Kupplung aufgesetzt und dann die trägerseitige Kupplung um den Kugelkopf der fahrzeugseitigen Kupplung geschlossen. Relevant ist hierbei, dass eine ausreichende Flächenkraft zwischen der fahrzeugseitigen und der trägerseitigen Kupplung erzeugt wird, damit der Lastenheckträger stabil Lastkräfte in die fahrzeugseitige Anhängerkupplung, insbesondere während der Fahrt des Fahrzeugs, einleiten kann.

### Stand der Technik

So ist aus DE 10 2006 013 465 A1 ein Lastenheckträger bekannt, dessen trägerseitige Kupplung eine starre Kalotte, die an einem Rahmengestell des Lastenheckträgers montiert ist und deren Wirkfläche in Fahrtrichtung ausgerichtet ist, und einen in Fahrzeuglängsrichtung schwenkbaren Spannbügel aufweist, der mittels eines Betätigungshebels sowie eines zwischengeschalteten Rastmechanismus schwenkbar ist. Zum Koppeln des Lastenheckträgers mit der fahrzeugseitigen Kupplung wird der Betätigungshebel in Fahrtrichtung gezogen, sodass der damit verrastete Spannbügel gegen eine Federkraft so geschwenkt wird, dass der Kugelkopf der fahrzeugseitigen Kupplung in die starre Kalotte gelangen kann. Durch Lösen des Betätigungshebels wird der Spannbügel durch die Federkraft über den Kugelkopf geschwenkt. Auf diese Weise kann der Lastenheckträger mit der fahrzeugseitigen Kupplung so gekoppelt werden, dass der Lastenheckträger im Kupplungszustand Lastkräfte in die Anhängerkupplung einleiten kann.

Einen im Vergleich dazu weiterentwickelten Lastenheckträger offenbart die DE 20 2014 104 263 U1. Die Kupplung des derartigen Lastenheckträgers weist zwei mit der fahrzeugseitigen Kupplung zusammenwirkende Kupplungselemente auf. Das eine Kupplungselement ist ein um eine Längsrichtung des Lastenheckträgers schwenkbarer Spannbügel, der zwischen einer Einkupplungsposition und einer Spannposition schwenkbar ist. In der Einkupplungsposition hat der Spannbügel keinen Kontakt mit der fahrzeugseitigen Kupplung, in der Spannposition klemmt der Spannbügel einen Kupplungskopf (Kugelkopf) der fahrzeugseitigen Kupplung ein. Das andere Kupplungselement ist eine Stabilisierungsvorrichtung in Form von zwei nicht betätigbaren Anschlägen am Lastenheckträger, zwischen denen die fahrzeugseitige Anhängerkupplung eingehängt wird und zwar derart, dass eine Kraft in Fahrtrichtung auf einen Kupplungshals der fahrzeugseitigen Kupplung und eine Kraft entgegen der Fahrtrichtung auf einen Kupplungskopf der fahrzeugseitigen Kupplung aufbringbar ist.

Weiterer Stand der Technik ist aus der NL 2 017 968 B1, der DE 102 08 163 A1 und der WO 2013/121271 A1 bekannt.

Bei den bekannten Lastenheckträgern besteht nun die Gefahr, dass unter großer Lasteinwirkung auf die trägerseitige Kupplung, insbesondere bei einem Unfall des mit dem Lastenheckträger gekoppelten Fahrzeugs, der Spannbügel der trägerseitigen Kupplung entgegen oder trotz der Spannkraft von der fahrzeugseitigen Kupplung gelöst wird. In diesem Fall besteht die Gefahr, dass sich der Lastenheckträger gänzlich von der fahrzeugseitigen Kupplung und damit von dem Fahrzeug löst.

### Kurzbeschreibung der Offenbarung

Demgegenüber liegt der Offenbarung die Aufgabe zu Grunde, die bereits bekannten Lastenheckträger aus dem Stand der Technik insbesondere gemäß der DE 20 2014 104 263 U1 zu verbessern. Insbesondere ist es die Aufgabe der vorliegenden Offenbarung, eine sichere Verbindung des Lastenheckträgers mit der fahrzeugseitigen Kupplung bereitzustellen. Insbesondere soll auch unter großer Lasteinwirkung auf die trägerseitige Kupplung verhindert werden, dass sich der Spannbügel der trägerseitigen Kupplung von der fahrzeugseitigen Kupplung löst.

Diese Aufgabe wird hinsichtlich des Lastenheckträgers gelöst durch die Merkmalskombination des Anspruchs 1.

Der Lastenheckträger weist ausgehend von der DE 20 2014 104 263 U1, deren Offenbarung auch zum Gegenstand der vorliegenden Offenbarung gemacht wird, ein Basiselement und eine zum Koppeln mit einer Kugelkopf-Anhängerkupplung (fahrzeugseitige Kupplung) eines Fahrzeugs vorgesehenen Kupplung (trägerseitige Kupplung) auf. Die (trägerseitige) Kupplung weist eine an dem Basiselement (bewegungsfest / starr) angeordnete, vorzugsweise gehaltene / fixierte, Spannbacke bzw. Lager-Kupplungselement (feste Kugelkalotte) und einen relativ zur Spannbacke bewegbaren Spannbügel / erstes Spannkupplungselement (U-förmiges Spannzugband/- eisen bzw. Schlinger) auf, der für einen Kupplungsvorgang bevorzugt um einen fahrzeugseitigen Kugelkopf herum schwenkbar und in Richtung hin zur Spannbacke anziehbar am Basiselement, gelagert ist (um in einem vollständig gekuppelten Zustand / (vollständigen) Kupplungszustand einen Kupplungskopf / Kugelkopf der (fahrzeugseitigen) Kugelkopf-Anhängerkupplung zwischen sich und der Spannbacke einzuspannen). Konkreter ausgedrückt kann der Spannbügel um seine (erste) Schwenkachse über den Kugelkopf einer Fahrzeug-Anhängerkupplung manuell geschwenkt (loser Kupplungszustand) und anschließend über einen ebenfalls manuell betätigbaren Spannmechanismus gegen den Kugelkopf angezogen werden, um diesen zwischen sich und der gegenüberliegenden Spannbacke einzuspannen (vollständiger Kupplungszustand).

D.h. der Spannbügel bzw. das erste Spannkupplungselement ist vorzugsweise um eine sich in die Längsrichtung des Basiselements erstreckende erste Schwenkachse am Basiselement schwenkbar gelagert, um in einem vollständig gekuppelten Zustand / Kupplungszustand einen Kupplungskopf / Kugelkopf der fahrzeugseitigen Kugelkopf-Anhängerkupplung zwischen sich und dem Lager-Kupplungselement einzuspannen.

Die (trägerseitige) Kupplung weist weiterhin ein relativ zur Spannbacke / zum Lager-Kupplungselement schwenkbares zweites Spannkupplungselement auf, das bevorzugt um eine sich (vertikal) senkrecht zur Längsrichtung des Basiselementes und damit senkrecht zur Schwenkachse des ersten Spannkupplungselements erstreckende zweite Schwenkachse schwenkbar ist, wobei das zweite Spannkupplungselement grundsätzlich so am Basiselement oder an der Kupplung gelagert ist, um in eine den Kupplungskopf / Kugelkopf bezüglich der Spannbacke / des Lager-Kupplungselementes und des ersten Spannkupplungselementes untergreifende Position relativbewegt zu werden (also den Kugelkopfhals unterhalb dem Kugelkopf zu umgreifen). In dem vollständig gekuppelten Zustand / (vollständiger Kupplungszustand) umgreift demnach das zweite Spannkupplungselement den Kupplungshals der (fahrzeugseitigen) Kugelkopf-Anhängerkupplung und zwar unterhalb des Kugelkopfs mit Bezug zum Basiselement bzw. zur Spannbacke.

In anderen Worten betrifft die vorliegende Offenbarung einen Lastenheckträger, der ein Basiselement und eine trägerseitige Kupplung zum Koppeln des Lastenheckträgers mit einer fahrzeugseitigen Kugelkopf-Anhängerkupplung aufweist. Die trägerseitige Kupplung weist das am Basiselement starr / fest fixierte Lager-Kupplungselement, das relativ zum Lager-Kupplungselement bewegbare, vorzugsweise schwenkbare erste Spannkupplungselement und das relativ zum Lager-Kupplungselement bewegbare, vorzugsweise schwenkbare zweite Spannkupplungselement auf. Das erste Spannkupplungselement ist bevorzugt um eine sich in die Längsrichtung des Basiselements bzw. in die Fahrzeuglängsrichtung erstreckende erste Schwenkachse schwenkbar und das zweite Spannkupplungselement ist bevorzugt um eine sich vertikal senkrecht zur Längsrichtung des Basiselementes bzw. in die Fahrzeughöhenrichtung erstreckende zweite Schwenkachse schwenkbar.

In dem vollständig gekuppelten Zustand / vollständigen Kupplungszustand ist das zweite Spannkupplungselement eine Position relativbewegt worden in es eine dem Lastenheckträger abgewandte Seite des Kupplungshalses der fahrzeugseitigen Kupplung (d.h. eine dem Fahrzeug zugewandte Vorderseite des Kupplungshalses unterhalb des Kugelkopfs) umgreift und das erste Spannkupplungselement ist in eine Position relativbewegt worden, in der es (in horizontaler Ausrichtung vollständig) den Kugelkopf der fahrzeugseitigen Kupplung umschließt. Somit leitet das zweite Spannkupplungselement eine Kraft entgegen der Fahrtrichtung des Fahrzeugs (und damit entgegen der Bewegungsrichtung des Lastenheckträgers) in den Kupplungshals der fahrzeugseitigen Kupplung ein und das erste Spannkupplungselement leitet eine Kraft in die und entgegen der Fahrtrichtung des Fahrzeugs in den Kupplungskopf der fahrzeugseitigen Kupplung ein.

Unter Zuhilfenahme des zweiten Spannkupplungselementes wird somit der Kupplungshals der fahrzeugseitigen Kupplung im vollständig gekuppelten Zustand / Kupplungszustand von einer dem Basiselement abgewandten Seite umgriffen und das zweite Spannkupplungselement untergreift den Kugel- bzw. Kupplungskopf der fahrzeugseitigen Kupplung. Zusätzlich dazu umgreift das erste Spannkupplungselement im vollständig gekuppelten Zustand zusammen mit dem Lager-Kupplungselement den Kupplungskopf / Kugelkopf der fahrzeugseitigen Kupplung.

Im Gegensatz zu den Kupplungen der Lastenheckträger, die bereits aus dem Stand der Technik bekannt sind, kann die Kupplung der hier offenbarten Lastenheckträgers größere Lastkräfte, wie sie z.B. bei einem Unfall des Fahrzeugs auftreten, aufnehmen. Somit ist es im Gegensatz zu den Kupplungen herkömmlicher Lastenheckträger auch weniger wahrscheinlich, dass sich die trägerseitige Kupplung des offenbarungsgemäßen Lastenheckträgers unter großer Lasteinwirkung, wie z.B. bei einem Unfall des Fahrzeugs, von der fahrzeugseitigen Kupplung löst. In anderen Worten ausgedrückt bewirkt das zweite, den Kupplungskopf untergreifende Spannkupplungselement in sicherer Weise ein Abheben des Lastenträgers von der fahrzeugseitigen Anhängerkupplung auch in einer Unfallsituation jenseits der Norm-vorgeschriebenen Unfallbedingungen.

In anderen Worten ausgedrückt weist die Kupplung den Sicherungshebel (zweites Spannkupplungselement) auf, der schwenkbar am Basiselement gelagert ist. D.h., der Sicherungshebel ist ein relativ zur Spannbacke bzw. zum Kupplungskopf / Kugelkopf schwenkbares Sicherungselement, das um seine sich (in Höhenrichtung des Basiselementes bzw. vertikal) senkrecht zur Längsrichtung des Basiselementes erstreckende (zweite) Schwenkachse schwenkbar ist. Weiterhin steht der Spannbügel in einer den Kugelkopf umgreifenden Bewegungs-/Schwenkposition bzw. (vollständigen) Kupplungsposition in Rasteingriff mit dem Sicherungshebel, wenn sich dieser in einer zumindest abschnittsweise zum Kupplungskopf / Kugelkopf ragenden, nämlich unter den Kupplungskopf / Kugelkopf ragenden, Bewegungs-/Schwenkposition bzw. Kupplungsposition befindet, derart, dass wenn sich die Kupplung in einem vollständig gekuppelten Zustand / vollständigen Kupplungszustand befindet, ein Ver- / Aufschwenken des Spannbügels und/oder des Sicherungshebels blockiert ist, insbesondere wenn der Spannbügel gegen die Spannbacke angezogen ist. Es kann dabei gesagt werden, dass die Spannbacke als Abschnitt des Basiselementes ausgebildet ist und der Sicherungshebel den Kugelkopf bezüglich der Spannbacke und des Spannbügels untergreift und im vollständig gekuppelten Zustand den Kupplungshals der fahrzeugseitigen Anhängerkupplung bezüglich des Basiselements hintergreift, d.h. auf der dem Fahrzeug zugewandten Kupplungshals-Vorderseite umgreift.

Durch den zwischen dem ersten Spannkupplungselement (Spannbügel) und dem zweiten Spannkupplungselement (Sicherungshebel) erzeugten Rasteingriff zumindest bei Erreichen des vollständigen Kopplungszustands gemäß vorstehender Definition verhindert der Sicherungshebel zudem, dass sich der Spannbügel aus seiner vollständigen Kupplungsposition löst. Der Rasteingriff kann zudem auch verhindern, dass sich der Sicherungshebel aus seiner Kupplungsposition löst. Der Sicherungshebel verhindert also ein unerwünschtes Schwenken des Spannbügels um dessen Schwenkachse aus der Kupplungsposition heraus.

Weitere vorteilhafte Ausgestaltungen der Offenbarung sind in den abhängigen Ansprüchen beschrieben.

In einer bevorzugten Ausführungsform weist die Kupplung bzw. genauer gesagt das Lager-Kupplungselement weiterhin einen Stützkragen auf, welcher am Basiselement (bewegungsfest / starr) fixiert ist und an dem das zweite Spannkupplungselement für ein Untergreifen des Kupplungskopfes / Kugelkopfs positioniert ist, wodurch der Kupplungshals im vollständig gekuppelten Zustand / Kupplungszustand vom zweiten Spannkupplungselement und von dem Stützkragen im Wesentlichen vollständig umschlossen wird. Dabei sei darauf hingewiesen, dass der Stützkragen konstruktiv auch separat zum Lager-Kupplungselement am Basiselement beispielsweise durch Anschweißen befestigt (d.h. nicht notwendiger Weise unmittelbar mit der Spannbacke/Kugelkalotte verbunden) sein kann.

Vorteilhafterweise umschließt dann die Kupplung des Lastenheckträgers gemäß der vorliegenden Offenbarung im vollständig gekuppelten Zustand / Kupplungszustand im Gegensatz zu den Kupplungen der bisher bekannten Lastenheckträger nicht nur die dem Lastenheckträger zugewandte Seite des Kupplungshalses der fahrzeugseitigen Kupplung (durch den Stützkragen), sondern auch die dem Lastenheckträger abgewandte Seite des Kupplungshalses der fahrzeugseitigen Kupplung (durch den Spannhebel). Somit wird im vollständig gekoppelten Zustand / Kupplungszustand der Kupplungshals der fahrzeugseitigen Kupplung bzw. die fahrzeugseitige Kupplung vollständig von der Kupplung des Lastenheckträgers gemäß der vorliegenden Offenbarung d.h. vom Stützkragen und dem Spannhebel zusammen umschlossen. Damit kann der Lastenheckträger gemäß der vorliegenden Offenbarung große Lastkräfte, wie sie z.B. bei einem Unfall des Fahrzeugs auftreten können, in die fahrzeugseitige Kupplung einleiten, bzw. die Kupplung kann nicht mehr über den Kugelkopf abgestreift werden.

Wie vorstehend bereits ausgeführt wurde ist es besonders vorteilhaft, wenn das zweite Spannkupplungselement mit dem ersten Spannkupplungselement im vollständig gekuppelten Zustand / Kupplungszustand in Rasteingriff ist. In anderen Worten sind das erste und das zweite Spannkupplungselement im Kupplungszustand formschlüssig miteinander gekoppelt.

Der Rasteingriff zwischen dem ersten Spannkupplungselement und dem zweiten Spannkupplungselement verhindert, dass sich das zweite Spannkupplungselement unabsichtlich (unter großer Lasteinwirkung z.B. bei einem Unfall des Fahrzeugs) aus dem Kupplungszustand bewegt / löst. Der Rasteingriff verhindert dabei ein Schwenken des zweiten Spannkupplungselementes um die zweite Schwenkachse.

Es ist denkbar, dass der Rasteingriff so realisiert ist, dass das erste Spannkupplungselement an seiner (im Kupplungszustand) dem zweiten Spannkupplungselement zugewandten Seite eine erste Eingriffsstruktur und das zweite Spannkupplungselement an seiner (im Kupplungszustand) dem ersten Spannkupplungselement zugewandten Seite eine zweite Eingriffsstruktur aufweist, die komplementär zu der ersten Eingriffsstruktur ausgebildet ist und mit dieser in Rasteingriff bringbar ist.

Dank der ersten Eingriffsstruktur am ersten Spannkupplungselement und der zweiten Eingriffsstruktur am zweiten Spannkupplungselement ist ein Rasteingriff zwischen dem ersten Spannkupplungselement und dem zweiten Spannkupplungselement leicht umzusetzen.

Dabei ist vorstellbar, dass die erste Eingriffsstruktur als sich im vollständig gekuppelten Zustand / Kupplungszustand (vertikal) senkrecht zur Längsrichtung des Basiselements erstreckender Vorsprung oder Rastzahn und die zweite Eingriffsstruktur als zu dem Vorsprung komplementär ausgebildete Aufnahme oder Kerbe ausgebildet ist, die im vollständig gekuppelten Zustand / Kupplungszustand in Anlagekontakt mit dem Vorsprung ist.

Im Rasteingriff greift also der Vorsprung am ersten Spannkupplungselement in die Aufnahme am zweiten Spannkupplungselement ein. Somit verhindert der Vorsprung, dass sich das zweite Spannkupplungselement aus dem Kupplungszustand lösen kann.

Vorzugsweise ist die Aufnahme eine zum Basiselement hin zurückgenommene Vertiefung im zweiten Spannkupplungselement. Dabei ist die Aufnahme vorteilhaftweise an einer im Kupplungszustand dem Basiselement abgewandten Seite des zweiten Spannkupplungselementes vorgesehen. Der Vorsprung ist vorteilhafterweise ebenfalls an einer dem Basiselement abgewandten Seite des ersten Spannkupplungselementes vorgesehen. Im Rasteingriff greift der Vorsprung von der dem Basiselement abgewandten Seite des zweiten Spannkupplungselementes in dessen Aufnahme ein und verhindert somit ein Schwenken des zweiten Spannkupplungselementes um die zweite Schwenkachse.

Bei einer Ausführungsform der vorliegenden Offenbarung ist an dem ersten Spannkupplungselement ein Sicherungselement angeordnet, das um eine sich in die Längsrichtung des Basiselements erstreckende dritte Schwenkachse schwenkbar ist und dabei schwenkbar am ersten Spannkupplungselement gelagert oder daran fixiert ist. Das Sicherungselement weist einen (im vollständig gekuppelten Zustand / Kupplungszustand) dem zweiten Spannkupplungselement zugewandten Rasthaken auf, der im vollständig gekuppelten Zustand / Kupplungszustand in Rasteingriff mit dem zweiten Spannkupplungselement steht, d.h. das zweite Spannkupplungselement, insbesondere eine Hinterschneidung am zweiten Spannkupplungselement, umgreift. Der Rasthaken umgreift dabei insbesondere von oberhalb und außerhalb des zweiten Spannkupplungselementes das zweiten Spannkupplungselement. Insbesondere umgreift der Rasthaken eine Außenkante des zweiten Spannkupplungselementes, die sich im Kupplungszustand in die Längsrichtung des Basiselementes erstreckt.

Dabei verhindert der Rasthaken ein Schwenken des zweiten Spannkupplungselementes um die zweite Schwenkachse. Damit wirkt das Sicherungselement einem unabsichtlichen Lösen des zweiten Spannkupplungselementes aus dem Kupplungszustand entgegen.

Es ist außerdem wünschenswert, wenn der Lastenheckträger ferner eine Antriebswelle aufweist, die sich in die Längsrichtung des Basiselementes zur (manuellen) Betätigung der Kupplung erstreckt und die an ihrem der Kupplung zugewandten Endabschnitt ein drehfest mit der Antriebswelle verbundenes nockenförmiges Zwischenelement aufweist, das eine Rotation der Antriebswelle um ihre Längsachse auf das zweite Spannungselement für dessen Schwenkbewegung zumindest in einen entkoppelten Zustand (entspricht einem nicht vollständig gekuppelten Zustand bzw. einem Nicht-Kupplungszustand) überträgt. Insbesondere ist dabei das Zwischenelement zwischen dem Lager-Kupplungselement und dem zweiten Spannkupplungselement angeordnet und überträgt eine Rotation der Antriebswelle um ihre Längsachse auf das zweite Spannungselement.

Unter Zuhilfenahme des Zwischenelementes wird durch die Rotation der Antriebswelle um ihre Längsachse das zweite Spannkupplungselement um die zweite Schwenkachse geschwenkt, insbesondere von einer Kupplungsposition des zweiten Spannkupplungselementes in eine Nicht-Kupplungsposition. Die Kupplungsposition des zweiten Spannkupplungselementes ist eine Position, in der sich das zweite Spannkupplungselement im Kupplungszustand befindet. Die Nicht-Kupplungsposition ist eine Position des zweiten Spannkupplungselementes, in dem es sich in einem Nicht-Kupplungszustand befindet. Im Nicht-Kupplungszustand geben zumindest das erste und das zweite Spannkupplungselement die fahrzeugseitige Kupplung frei.

Insbesondere ist es vorteilhaft, wenn ein axialer Endabschnitt eines pleuelstangenartigen Bewegungsübertragungselementes drehfest an einen mit der Antriebswelle drehfest verbundenen ersten Zwischenhebel gekoppelt ist und der andere axiale Endabschnitt des Bewegungsübertragungselementes an einen mit dem ersten Spannkupplungselement fest verbundenen zweiten Zwischenhebel gekoppelt ist, um eine Rotation der Antriebswelle um ihre Längsachse auf das erste Spannkupplungselement für ein Ein- und Auskuppeln der Kupplung zu übertragen. Damit ermöglicht eine Rotation der Antriebswelle um ihre Längsachse ein Schwenken des ersten Spannkupplungselementes um die erste Schwenkachse.

Somit kann auch das erste Spannkupplungselement durch eine Rotation der Antriebswelle um ihre Längsachse unter Zuhilfenahme des Bewegungsübertragungselementes einfach und effizient um die erste Schwenkachse geschwenkt werden.

Zudem kann vorgesehen sein, dass das erste und das zweite Spannkupplungselement über das Bewegungsübertragungselement, die Antriebswelle und das nockenförmige Zwischenelement so miteinander wirkverbunden sind, dass bei Rotation der Antriebswelle um ihre Längsachse das erste und das zweite Spannkupplungselement in synchronisierter Weise /in Kooperation miteinander / simultan in den vollständig gekuppelten Zustand / Kupplungszustand (zueinander hin) sowie aus dem vollständig gekuppelten Zustand / Kupplungszustand geschwenkt werden.

Durch Rotieren der Antriebswelle um ihre Längsachse wird unter Zuhilfenahme des Bewegungsübertragungselementes also gleichzeitig das erste Spannkupplungselement um die erste Schwenkachse und das zweite Spannkupplungselement um die zweite Schwenkachse (in einem Schritt) geschwenkt. Durch nur eine Betätigung (der Antriebswelle) / In nur einem Schritt können somit das erste und das zweite Spannkupplungselement geschwenkt werden.

Weiterhin ist es möglich, dass zwischen dem Stützkragen und dem zweiten Spannkupplungselement ein Vorspannelement, insbesondere eine Feder, angeordnet ist, welches das zweite Spannkupplungselement in Richtung hin zum Stützkragen zieht. Das Vorspannelement ist also im vollständig gekuppelten Zustand / Kupplungszustand entspannt.

Wenn das Vorspannelement im vollständig gekuppelten Zustand / Kupplungszustand entspannt ist, kann das zweite Spannkupplungselement nur mit einer Kraft, die größer als die Vorspannkraft des Vorspannelementes und dieser entgegengerichtet ist, aus seiner Kupplungsposition gelöst werden. Damit wirkt das Vorspannelement einem unabsichtlichen Lösen des zweiten Spannkupplungselementes aus dem Kupplungszustand entgegen.

Besonders hilfreich ist es, wenn das zweite Spannkupplungselement einen, insbesondere teilkreisförmigen oder kragenförmigen, Hals-Kupplungsabschnitt aufweist, der zum Umgreifen eines Kupplungshalses der Kugelkopf-Anhängerkupplung des Fahrzeugs ausgebildet ist, und wenn das zweite Spannkupplungselement (und dessen Hals-Kupplungsabschnitt) so dimensioniert ist, dass es im Kupplungszustand eine dem Basiselement gegenüberliegende Seite des Kupplungshalses der Kugelkopf-Anhängerkupplung des Fahrzeugs im Wesentlichen vollständig umgreift.

Es ist außerdem sinnvoll, wenn (zusätzlich dazu) der Stützkragen als ein, insbesondere teilkreisförmiger oder kragenförmiger, Hals-Kupplungsabschnitt geformt ist, der zum Umgreifen des Kupplungshalses der Kugelkopf-Anhängerkupplung des Fahrzeugs ausgebildet ist, und einen, insbesondere teilkugelförmigen oder schalenförmigen, Kugelkopf-Kupplungsabschnitt aufweist, der zum (teilweisen) Umschließen eines Kugelkopfes der Kugelkopf-Anhängerkupplung des Fahrzeugs ausgebildet ist.

Vorteilhafterweise wirken dabei der Hals-Kupplungsabschnitt des zweiten Spannkupplungselementes und der Stützkragen im vollständig gekuppelten Zustand / Kupplungszustand so zusammen, dass der Stützkragen und das zweite Spannkupplungselement den Kupplungshals der Kugelkopf-Anhängerkupplung vollständig umschließen. Somit ist es unwahrscheinlich bis unmöglich, dass sich die Kupplung des Lastenheckträgers unabsichtlich (z.B. unter großer Krafteinwirkung) aus dem Kupplungszustand löst. Indem der Kugelkopf-Kupplungsabschnitt den Kugelkopf / Kupplungskopf der Kugelkopf-Anhängerkupplung umgreift, wird ein unabsichtliches Freigeben der Kugelkopf-Anhängerkopplung durch die trägerseitige Kupplung erschwert.

Darüber hinaus ist es wünschenswert, wenn der Lastenheckträger weiterhin eine Aufnahmevorrichtung aufweist, die um eine in die Längsrichtung des Basiselements verlaufende vierte Schwenkachse schwenkbar ist, und wenn die Antriebswelle drehfest mit der Aufnahmevorrichtung gekoppelt ist, sodass die Antriebswelle bei einem Schwenken der Aufnahmevorrichtung um die vierte Schwenkachse um ihre Längsachse rotiert wird. Wenn die Aufnahmevorrichtung um ihre vierte Schwenkachse zwischen einer Leerposition, in der sich die Aufnahmevorrichtung vertikal senkrecht zur Längsrichtung des Basiselements erstreckt, und einer Transportposition, in der die Aufnahmevorrichtung sich horizontal senkrecht zur Längsrichtung des Basiselements erstreckt, geschwenkt wird, wird die Antriebswelle um ihre Längsachse rotiert.

Wenn also der Lastenheckträger mit dem Fahrzeug gekoppelt werden soll und bereits in Kontakt mit dem Lager-Kupplungselement ist, kann durch eine Betätigung / in einem Schritt, mit der / dem die Aufnahmevorrichtung für den Transport von Transportgut (z.B. Fahrräder) vorbereitet wird, gleichzeitig die trägerseitige Kupplung mit der fahrzeugseitigen Kupplung gekoppelt werden. Dies erleichtert einem Verwender das Koppeln bzw. das Verwenden des Lastenheckträgers.

Besonders bevorzugt ist, wenn der Spannbügel um eine erste Schwenkachse schwenkbar ist und zum Realisieren des Rasteingriffs eine erste Eingriffsstruktur aufweist, die an einem Abschnitt des Spannbügels angebracht ist, der der ersten Schwenkachse gegenüberliegt (in Querrichtung des Basiselementes bzw. quer zur Fahrtrichtung des Fahrzeugs bzw. quer zu einer Längsrichtung des Basiselementes betrachtet) und einen maximalem Abstand zu der ersten Schwenkachse hat. Es kann dabei vorgesehen sein, dass sich die erste Schwenkachse in die / entlang der Längsrichtung des Basiselementes, d.h. entlang einer Fahrtrichtung des Fahrzeugs, erstreckt.

Wenn die erste Eingriffsstruktur mit maximalem Abstand zur ersten Schwenkachse angeordnet ist, erfolgt auch der Rasteingriff gegenüberliegend (in Querrichtung des Basiselementes bzw. quer zur Fahrtrichtung des Fahrzeugs bzw. quer zu einer Längsrichtung des Basiselementes betrachtet) und mit maximalem Abstand zur ersten Schwenkachse. An diesem Abschnitt des Spannbügels, der gegenüberliegend und mit maximalem Abstand zur ersten Schwenkachse ist, ist aufgrund der Hebelwirkung eine Kraft, die auf den Spannbügel aufgebracht werden müsste, um diesen (in unbeabsichtigter Weise) um die erste Schwenkachse zu schwenken im Vergleich mit allen übrigen Abschnitten am Spannbügel am geringsten. Damit ist an diesem der Schwenkachse gegenüberliegenden Abschnitt am Spannbügel, der den maximalen Abstand zur ersten Schwenkachse hat, die Gefahr am größten, dass eine Kraft, die bspw. in Folge eines Unfalls auf diesen Abschnitt des Spannbügels einwirkt, den Spannbügel unerwünscht aus der Kupplungsposition schwenkt. Dadurch, dass sich an diesem Abschnitt des Spannbügels die erste Eingriffsstruktur befindet und somit auch der Rasteingriff erfolgt, kann einem unerwünschten Verschwenken des Spannbügels um die erste Schwenkachse optimal und sehr effektiv entgegengewirkt werden.

Insbesondere ist zum Realisieren des Rasteingriffs vorgesehen, dass der Spannbügel eine erste Eingriffsstruktur und der Sicherungshebel eine zweite Eingriffsstruktur aufweist, die jeweils komplementär zueinander ausgebildet sind, wie dies vorstehend bereits angedeutet wurde.

In einem vollständig gekuppelten Zustand / Kupplungszustand greift also die zweite Eingriffsstruktur am Sicherungshebel in die erste Eingriffsstruktur am Spannbügel ein. Die erste Eingriffsstruktur und die zweite Eingriffsstruktur sind im vollständig gekuppelten Zustand / Kupplungszustand einander zugewandt. Auf diese Weise kann der Rasteingriff zwischen Spannbügel und Sicherungshebel besonders effektiv und einfach realisiert werden.

In einer bevorzugten Ausführungsform ist die erste Eingriffsstruktur als eine von dem Spannbügel hervorragende Lasche mit einer darin ausgeformten Durchgangsöffnung ausgebildet und die zweite Eingriffsstruktur ist als von dem Sicherungshebel hervorragender Haken oder Zapfen ausgebildet.

Vorzugsweise greift zur Realisierung des Rasteingriffs der Haken /Zapfen des Sicherungshebels in die Durchgangsöffnung am Spannbügel ein. Im vollständig gekuppelten Zustand / Kupplungszustand greift somit der Haken/Zapfen am Sicherungshebel in die Durchgangsöffnung der Lasche am Spannbügel.

Optional ist es denkbar, nicht der gesamte Sicherungshebel in der unter den Kupplungskopf ragenden Schwenkposition bzw. Kupplungsposition unter den Kupplungskopf ragt und damit den Kugelkopfhals auf seiner dem Fahrzeug zugewandten Seite umgreift, sondern nur dessen Haken auf der der ersten Schwenkachse gegenüberliegenden Seite des Kugelkopfhalses den Kugelkopf untergreift. Auf diese Weise kann ein sicherer und einfach realisierbarer Rasteingriff zwischen der ersten Eingriffsstruktur und der zweiten Eingriffsstruktur sichergestellt und gleichzeitig eine ausreichende Sicherung gegen ein unbeabsichtigtes Abheben des Trägers von der Anhängerkupplung erreicht werden.

Weiter kann vorgesehen sein, dass, wenn sich der Spannbügel in der den Kugelkopf umgreifenden Schwenkposition bzw. Kupplungsposition befindet, die erste Eingriffsstruktur sich in Höhenrichtung erstreckt und von einer unteren Kante des Spannbügels, die in der den Kugelkopf umgreifenden Schwenkposition bzw. Kupplungsposition in Höhenrichtung betrachtet einem dem Kugelkopf gegenüberliegenden Ende der fahrzeugseitigen Anhängerkupplung zugewandt ist, in Richtung des dem Kugelkopf gegenüberliegenden Endes der fahrzeugseitigen Anhängerkupplung hervorragt.

Wenn die erste Eingriffsstruktur bzw. die Lasche derartig am Spannbügel positioniert ist und ausgerichtet ist, ist die Realisierung eines Rasteingriffs zwischen erster Eingriffsstruktur und zweiter Eingriffsstruktur besonders einfach. Zudem ist somit eine einfache Gestaltung der zweiten Eingriffsstruktur realisierbar. Die derartige Ausrichtung der Lasche bzw. ersten Eingriffsstruktur relativ zum Spannbügel ist einfach umzusetzen und ermöglicht einen effektiven Rasteingriff mit der zweiten Eingriffsstruktur.

Es ist vorteilhaft, wenn die erste Eingriffsstruktur so am Spannbügel angeordnet ist und die zweite Eingriffsstruktur so am Sicherungshebel angeordnet ist, dass der Rasteingriff zwischen Spannbügel und Sicherungselement unterhalb des Kugelkopfes und, vorzugsweise mit Abstand zum Kupplungskopf, erfolgt.

Unterhalb des Kupplungskopfes sichert der Rasteingriff besonders effektiv die fahrzeugseitige Kupplung in der trägerseitigen Kupplung. Zudem ist es vorteilhaft, wenn die erste Eingriffsstruktur und die zweite Eingriffsstruktur im vollständig gekuppelten Zustand unterhalb des Kupplungskopfes angeordnet sind, da dies platzsparend ist. Der Rasteingriff ist somit für einen Verwender einfach und schnell umzusetzen / zur realisieren.

Weiterhin ist bevorzugt, wenn der Spannbügel an seiner in der den Kugelkopf umgreifenden Schwenkposition bzw. Kupplungsposition dem Kugelkopf zugewandten Innenfläche zumindest eine, insbesondere ellipsenförmige, Vertiefung / Delle aufweist, die im vollständig gekuppelten Zustand / Kupplungszustand, vorzugsweise vollständig, an de, Kugelkopf / Kupplungskopf anliegt. Mit anderen Worten ist die Vertiefung / Delle so ausgebildet / geformt, dass sie der Kugelform des Kugelkopfes folgt / an diese angepasst ist. Mit anderen Worten ist die Delle so ausgebildet und am Spannbügel angeordnet, dass sie die Kontaktfläche zwischen Kugelkopf und Spannbügel erhöht.

Die Vertiefung / Delle am Spannbügel erhöht (aufgrund der -im Vergleich ohne Delle am Spannbügel - vergrößerten Kontaktfläche zwischen Kugelkopf und Spannbügel) die Spannkraft, die der Spannbügel (zusammen mit der Spannbacke) im vollständig gekuppelten Zustand / Kupplungszustand auf den Kupplungskopf / Kugelkopf ausübt. Dies sorgt für einen sicheren Sitz der trägerseitigen Kupplung an der fahrzeugseitigen Kupplung.

Sinnvollerweise befindet sich die Vertiefung / Delle an einem Abschnitt bzw. an Abschnitten (der Innenfläche) des Spannbügels, die in Kontakt mit dem Kupplungskopf / Kugelkopf kommt bzw. kommen. Dies ist insbesondere an dem Abschnitt des Spannbügels der Fall, der im vollständig gekuppelten Zustand / Kupplungszustand, in Querrichtung des Basiselementes betrachtet, der Spannbacke, vorzugsweise einem Kugelkopf-Kupplungsabschnitt der Spannbacke, gegenüberliegt.

Wenn sich die Delle an diesem Abschnitt des Spannbügels befindet, kann die Spannkraft zwischen Spannbügel und Spannbacke, die im vollständig gekuppelten Zustand auf den Kupplungskopf / Kugelkopf ausgeübt wird, besonders effektiv erhöht werden.

Weiter ist es bevorzugt, wenn der Sicherungshebel einen (sich im vollständig gekuppelten Zustand / Kupplungszustand in Längsrichtung des Basiselementes erstreckenden und zum Fahrzeug hin ragenden) Anschlag hat, der eine Schwenkbewegung des Sicherungshebels zum Kupplungskopf hin beschränkt.

Der Anschlag schützt also davor, dass der Sicherungshebel, insbesondere dessen zweite Eingriffsstruktur, im vollständig gekuppelten Zustand / Kupplungszustand unerwünscht gegen die Kugelkopf-Anhängerkupplung reibt.

Es ist außerdem hilfreich, wenn an dem Spannbügel ein Deckel angeordnet ist, der bewegungsfest mit dem Spannbügel verbunden ist und in der den Kugelkopf umgreifenden Schwenkposition bzw. Kupplungsposition des Spannbügels den Abschnitt des Kupplungskopfs / Kugelkopfes, der von dem Spannbügel, insbesondere oberhalb des Kupplungskopfes / Kugelkopfes, freigelassen ist, bedeckt.

Die bewegungsfeste Verbindung zwischen Deckel und Spannbügel bedeutet, dass der Deckel mit dem Spannbügel zusammen (um die erste Schwenkachse) schwenkbar ist. Auf diese Weise schützt der Deckel den Spannbügel und den Kupplungskopf / Kugelkopf vor Verunreinigungen während des vollständig / gekuppelten Zustands. Insbesondere schützt der Deckel davor, dass während der aktiven Verwendung des Lastenheckträgers zwischen Spannbügel und Kupplungskopf / Kugelkopf Dreck / Verunreinigungen eintreten kann / können. Auf diese Weise wird ein Verschleiß des Spannbügels und/oder ein Verschleiß des Kupplungskopfes / Kugelkopfes verringert.

Zudem ist es möglich, dass der Deckel einen zumindest abschnittsweise vorgesehenen Umgreifrand ausbildet, der die Außenumfangsfläche des Spannbügels umgreift und bewegungsfest, vorzugsweise formschlüssig, kraftschlüssig oder stoffschlüssig, mit dem Spannbügel verbunden ist.

Auf diese Weise ist der Deckel mithilfe des Umgreifrands so mit dem Spannbügel verbunden, dass er mit dem Spannbügel zusammen (um die erste Schwenkachse) schwenkbar ist. Auf diese Weise lässt sich der Deckel in einem Griff / in einem Schritt zusammen mit dem Spannbügel in die den Kugelkopf umgreifende Schwenkposition bzw. Kupplungsposition bringen oder aus dieser lösen. Dies vereinfacht die Handhabbarkeit des Lastenheckträgers.

Es kann vorgesehen sein, dass der Anschlag des Sicherungshebels im vollständig gekuppelten Zustand am Deckel anliegt. Genauer gesagt ist es vorteilhaft, wenn ein Abschnitt des Deckels, vorzugsweise ein Abschnitt des Umgreifrandes, der im vollständig gekuppelten Zustand dem Sicherungshebel zugewandt ist, im vollständig gekuppelten Zustand in Kontakt mit dem Anschlag des Sicherungshebels ist.

Der Kontakt zwischen Anschlag und dem Deckel begrenzt die Schwenkbewegung des Sicherungshebels um dessen (zweite) Schwenkachse zur Kugelkopf-Anhängerkupplung hin. Auf diese Weise ist die Position des Sicherungshebels relativ zum Spannbügel bzw. zum Kugelkopf einfach festgelegt.

Beispielsweise kann vorgesehen sein, dass der Anschlag im vollständig gekuppelten Zustand an dem Umgreifrand anschlägt / anliegt. Über den Umgreifrand steht in Querrichtung ein Rand des Deckels hervor, der sich im vollständig gekuppelten Zustand in Längsrichtung erstreckt. Der Rand des Deckels ragt dabei im vollständig gekuppelten Zustand vollständig über den Anschlag. Alternativ dazu kann der Anschlag eine in Höhenrichtung nach oben ragende Kante aufweisen, die im vollständig gekuppelten Zustand von außen an dem Rand des Deckels anschlägt / anliegt.

Es ist außerdem sinnvoll, wenn von der Spannbacke ein (sich in Querrichtung des Basiselementes erstreckender) Vorsprung mit Durchgansbohrung zur Aufnahme einer Welle vorgesehen ist, die zur drehbaren bzw. schwenkbaren Lagerung des Sicherungshebels an der Spannbacke vorgesehen ist und somit die (zweite) Schwenkachse des Sicherungshebels definiert.

Mithilfe des Vorsprungs und der in dessen Durchgangsbohrung einführbaren Welle ist der Sicherungshebel auf einfach Weise schwenkbar an der Spannbacke befestigt.

Zudem kann vorgesehen sein, dass die Spannbacke einen, insbesondere teilkugelförmigen oder schalenförmigen, Kugelkopf-Kupplungsabschnitt aufweist, der zum (teilweisen) Umschließen des Kugelkopfes der Kugelkopf-Anhängerkupplung des Fahrzeugs ausgebildet ist.

Im vollständig gekuppelten Zustand ist dann der Kugelkopf zwischen dem Kugelkopf-Kupplungsabschnitt und dem Spannbügel verspannt / eingeklemmt. Indem der Kugelkopf-Kupplungsabschnitt dank seiner Formgebung den Kugelkopf der Kugelkopf-Anhängerkupplung teilweise umgreift, wird ein unabsichtliches Freigeben der Kugelkopf-Anhängerkopplung durch die trägerseitige Kupplung erschwert. Sinnvollerweise ist der Kugelkopf-Kupplungsabschnitt so ausgebildet und relativ zum Kupplungskopf / Kugelkopf anordenbar, dass er in die und entgegen der Fahrtrichtung wirkende Kräfte in den Kupplungskopf / Kugelkopf einleiten kann.

Vorzugsweise ist die erste Eingriffsstruktur (die Lasche) an dem Abschnitt des Spannbügels angeordnet, der dem Kugelkopf-Kupplungsabschnitt (in Querrichtung betrachtet) gegenüberliegt. Der Sicherungshebel wiederum ist so dimensioniert und an der Spannbacke angeordnet, dass seine zweite Eingriffsstruktur im vollständig gekuppelten Zustand mit der ersten Eingriffsstruktur in Rasteingriff treten kann. Auf diese Weise wirkt der Rasteingriff an einer dem Kugelkopf-Kupplungsabschnitt gegenüberliegenden Position. Dadurch verhindert der Rasteingriff besonders effektiv, dass sich der Spannbügel aus seiner Kupplungsposition löst. Somit verhindert der Rasteingriff an dieser Position auf besonders effektive Weise ein Lösen der fahrzeugseitigen Kupplung aus der trägerseitigen Kupplung.

Es ist zudem wünschenswert, dass die Kupplung, vorzugsweise die Spannbacke, weiterhin den nunmehr teilkreisförmigen Stützkragen aufweist, der einen Umfangsabschnitt des Kupplungshalses, der dem Basiselement zugewandt ist (d.h. dem Fahrzeug abgewandt ist), (teilweise) umgreift. Vorzugsweise ist der Stützkragen dabei am Basiselement, bevorzugt an der Spannbacke, (bewegungsfest / starr) fixiert. Auf diese Weise kann der Stützkragen Kräfte, die entgegen einer Fahrtrichtung des Fahrzeugs wirken und in den Kupplungshals eingeleitet werden, effektiv aufnehmen / abstützen. Dies trägt zu einer sicheren Kopplung zwischen trägerseitiger Kupplung und fahrzeugseitiger Kupplung bei.

Der Stützkragen ist vorteilhafterweise so dimensioniert und geformt, dass der Kupplungskopf in Höhenrichtung auf dem Stützkragen aufliegt. Der Stützragen stützt die fahrzeugseitige Kupplung somit auch in Höhenrichtung ab. Dies erleichtert das Einhängen der fahrzeugseitigen Kupplung in die Kupplung des Lastenheckträgers.

Vorzugsweise ist zwischen der Spannbacke, vorzugsweise dem Stützkragen, und dem Sicherungshebel ein Vorspannelement, insbesondere eine Feder, vorzugsweise Spiralfeder, angeordnet, welches den Sicherungshebel in seine unter den Kupplungskopf ragende Schwenkposition bzw. Kupplungsposition vorspannt. Das Vorspannelement ist also im vollständig gekuppelten Zustand / Kupplungszustand zumindest teilweise entspannt.

Wenn das Vorspannelement im vollständig gekuppelten Zustand / Kupplungszustand zumindest teilentspannt ist, kann der Sicherungshebel nur mit einer Kraft, die größer als die noch verbleibende Teil-Vorspannkraft des Vorspannelementes und dieser entgegengerichtet ist, aus seiner Kupplungsposition gelöst werden. Damit wirkt das Vorspannelement einem unabsichtlichen Lösen des Sicherungshebels aus dem Kupplungszustand entgegen.

Ein von dem offenbarungsgemäßen Lastenheckträger gegebenenfalls unabhängig oder in Kombination damit zu beanspruchender Aspekt betrifft einen Lastenheckträger, der ein Basiselement und eine zum Koppeln mit einer Kugelkopf-Anhängerkupplung eines Fahrzeugs (fahrzeugseitige Kupplung) vorgesehene Kupplung (trägerseitige Kupplung) aufweist. Die Kupplung weist eine an dem Basiselement (bewegungsfest / starr) fixierte Spannbacke / Lager-Kupplungselement (feste Kugelkalotte) und einen relativ zur Spannbacke schwenkbaren Spannbügel / erstes Spannkupplungselement (U-förmiges Spannzugband/-eisen) auf, der / das um eine sich in die Längsrichtung des Basiselements erstreckende erste Schwenkachse schwenkbar ist, um in einem vollständig gekuppelten Zustand / Kupplungszustand einen Kupplungskopf / Kugelkopf der (fahrzeugseitigen) Kugelkopf-Anhängerkupplung zwischen sich und der Spannbacke einzuspannen. Konkreter ausgedrückt kann der Spannbügel um dessen Schwenkachse über den Kugelkopf einer Fahrzeug-Anhängerkupplung manuell geschwenkt (loser Kupplungszustand) und anschließend über einen ebenfalls manuell betätigbaren Spannmechanismus gegen den Kugelkopf angezogen werden, um diesen zwischen sich und der gegenüberliegenden Spannbacke einzuspannen (vollständiger Kupplungszustand). Die Kupplung weist weiterhin einen relativ zur Spannbacke schwenkbaren Sicherungshebel / zweites Spannkupplungselement auf, der / das um eine sich (vertikal) senkrecht zur Längsrichtung des Basiselementes / in Höhenrichtung des Basiselements erstreckende zweite Schwenkachse schwenkbar ist, um den Kupplungskopf / Kugelkopf bezüglich der Spannbacke und des Spannbügels zu untergreifen. In dem vollständig gekuppelten Zustand / (vollständiger) Kupplungszustand hintergreift der Sicherungshebel einen Kupplungshals der (fahrzeugseitigen) Kugelkopf-Anhängerkupplung bezüglich des Basiselementes.

### Kurzbeschreibung der Figuren

Verschiedene Aspekte und Ausführungsformen eines offenbarungsgemäßen Lastenheckträgers sind in den Figuren dargestellt.

Es zeigen:
Fig. 1 eine Perspektivdarstellung eines Lastenheckträgers gemäß einem ersten bevorzugten Ausführungsbeispiel im Kupplungszustand von schräg oben;
Fig. 2 eine Perspektivdarstellung des Lastenheckträgers nach Fig. 1 im Kupplungszustand von schräg unten;
Fig. 3 ist eine Perspektivansicht des Lastenheckträgers 1 nach Fig. 1 von schräg oben, bei dem ein Spannbügel den Kupplungskopf umgreift;
Fig. 4 ist eine perspektivische Detailansicht des Lastenheckträgers im Kupplungszustand, die eine zum ersten Ausführungsbeispiel alternative Ausführungsform eines Anschlags eines Sicherungshebels zeigt;
Fig. 5 eine Perspektivdarstellung eines Spannbügels des ersten Ausführungsbeispiels von außen;
Fig. 6 eine Perspektivdarstellung eines Sicherungshebels des ersten Ausführungsbeispiels;
Fig. 7 eine Perspektivdarstellung eines Spannbügels des ersten Ausführungsbeispiels von innen;
Fig. 8 eine Perspektivdarstellung einer Spannbacke des ersten Ausführungsbeispiels in einem, eine fahrzeugseitige Kugelkopf-Anhängerkupplung umgreifenden Zustand,
Fig. 9 eine Perspektivdarstellung eines Lastenheckträgers gemäß einem zweiten bevorzugten Ausführungsbeispiel in einem Kupplungszustand;
Fig. 10 eine Perspektivdarstellung des Lastenheckträgers nach Fig. 9 in einem Freigabezustand;
Fig. 11 eine Perspektivdarstellung eines Lastenheckträgers gemäß einem dritten bevorzugten Ausführungsbeispiel, der ein zusätzliches Sicherungselement aufweist;
Fig. 12 eine gegenüber Fig. 11 vereinfachte Perspektivdarstellung des Lastenheckträgers gemäß dem dritten bevorzugten Ausführungsbeispiel; und
Fig. 13 eine gegenüber Fig. 12 weiter vereinfachte Perspektivdarstellung eines Lastenheckträgers gemäß dem dritten bevorzugten Ausführungsbeispiel.

### Beschreibung bevorzugter Ausführungsbeispiele

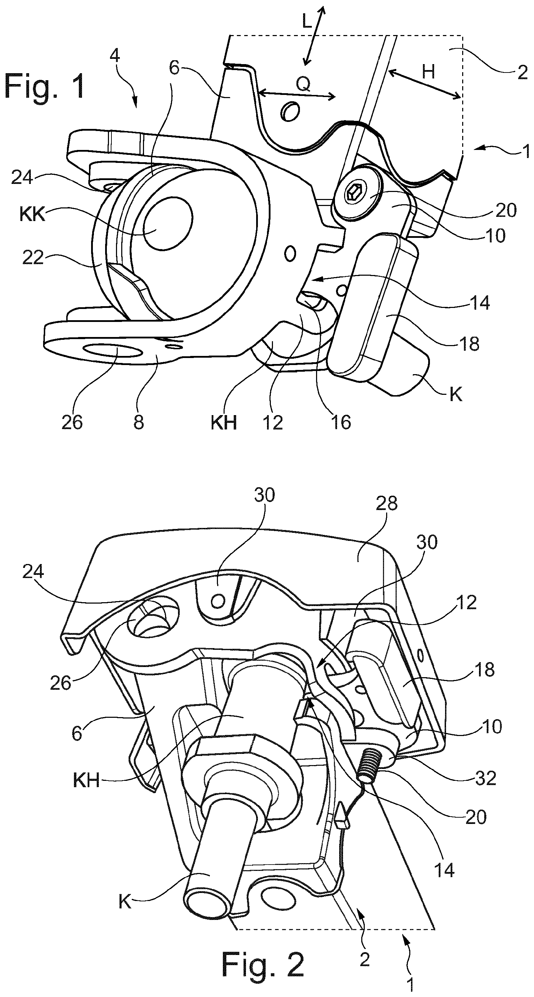

Fig. 1 ist eine Perspektivdarstellung eines offenbarungsgemäßen Lastenheckträgers (Lastenträgers) 1 gemäß einem ersten bevorzugten Ausführungsbeispiel mit einem Basiselement 2 und einer zum Koppeln mit einer Kugelkopf-Anhängerkupplung K eines Fahrzeugs (nicht dargestellt) vorgesehenen Kupplung 4.

Das Basiselement 2 erstreckt sich im Verwendungszustand (während der Kopplung des Lastenheckträgers 1 mit der Kugelkopf-Anhängerkupplung K eines Fahrzeugs bzw. direkt davor und direkt danach) üblicherweise parallel zum Boden und in eine Fahrzeuglängsrichtung. Die Kupplung 4 des Lastenträgers 1 befindet sich vorteilhafterweise an dem, dem Fahrzeug zugewandten Axialende des Basiselements 2. Die Kupplung 4 weist eine an dem Basiselement 2 bewegungsfest fixierte Spannbacke 6, einen relativ zur Spannbacke 6 schwenkbaren Spannbügel 8 (erstes Spannkupplungselement), der um eine sich in die Längsrichtung L des Basiselements 2 erstreckende erste Schwenkachse S1 schwenkbar ist, sowie einen relativ zur Spannbacke 6 schwenkbaren Sicherungshebel 10 (zweites Spannkupplungselement) auf, der um eine sich vertikal senkrecht zur Längsrichtung L des Basiselementes 2 bzw. in Höhenrichtung H des Basiselementes 2 erstreckende zweite Schwenkachse S2 schwenkbar ist. Die zweite Schwenkachse S2 erstreckt sich somit senkrecht zur ersten Schwenkachse S1. Die (Längsachse der) fahrzeugseitige(n) Kugelkopf-Anhängerkupplung K erstreckt sich zumindest im Bereich ihres freien Endabschnitts in die Höhenrichtung H des Basiselementes 2 (im gekuppelten Zustand). Es kann dabei auch gesagt werden, dass die Spannbacke 6 als fahrzeugzugewandter Endabschnitt des Basiselementes 2 ausgebildet ist und der Sicherungshebel 10 den Kugelkopf KK bezüglich der Spannbacke 6 bzw. des Basiselementes 2 und des Spannbügels 8 (im vollständig gekuppelten Zustand) untergreift sowie (im vollständig gekuppelten Zustand) einen Kupplungshals KH der fahrzeugseitigen Anhängerkupplung K gegenüber dem Basiselement 2 zumindest abschnittsweise hintergreift (also den Kupplungshals KH auf der dem Basiselement 2 abgewandten Halsseite umgreift).

Der Spannbügel 8 spannt in einem vollständig gekuppelten Zustand (nachfolgend vereinfacht als "Kupplungszustand" bezeichnet) den Kugelkopf KK der fahrzeugseitigen Anhängerkupplung K zwischen sich und der schalen- oder kalottenförmigen Spannbacke 6 ein. Die Position des Spannbügels 8 im vollständigen Kupplungszustand wird nachfolgend als "Kupplungsposition" bezeichnet. Der Spannbügel 8, auch als erstes Spannkupplungselement 8 zu bezeichnen, ist in seine Kupplungsposition manuell eingespannt. Das wiederum bedeutet, es müsste eine Kraft, die größer als die manuell erzeugte Einspannkraft des Spannkupplungselementes 8 ist und dieser entgegengerichtet ist, auf das Spannkupplungselement 8 aufgebracht werden, um es aus seiner Kupplungsposition zu lösen. Da aber diese ausreichend groß gewählt ist, hält der Lastträger 1 sicher in reibschlüssiger Weise am Kugelkopf KK der fahrzeugseitigen Anhängerkupplung K.

Der Spannbügel 8 weist eine erste Eingriffsstruktur auf. Die erste Eingriffsstruktur ist dem Sicherungshebel 10 in Kupplungsposition zugewandt. Der Sicherungshebel 10 weist eine zweite Eingriffsstruktur auf. Die zweite Eingriffsstruktur ist dem Spannbügel 8 in Kupplungsposition zugewandt. Die zweite Eingriffsstruktur ist komplementär zu der ersten Eingriffsstruktur ausgebildet und steht in Kupplungsposition (im vollständigen Kupplungszustand) in Rasteingriff mit der ersten Eingriffsstruktur. Die Position des Sicherungshebels 10 im vollständigen Kupplungszustand wird nachfolgend ebenfalls als "Kupplungsposition" bezeichnet. Der Sicherungshebel 10 ist in seine Kupplungsposition Feder-vorgespannt. Das heißt, es muss eine Kraft, die größer als die Vorspannungskraft des Sicherungshebels 10 ist und dieser entgegengerichtet ist, auf den Sicherungshebel 10 aufgebracht werden, um ihn aus seiner Kupplungsposition zu lösen/zu bewegen.

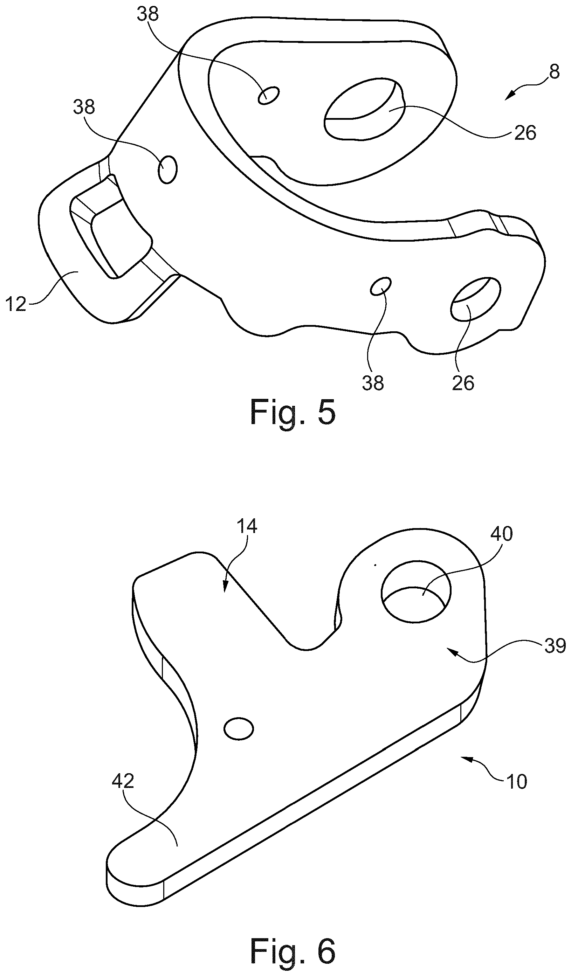

Die erste Eingriffsstruktur ist vorzugsweise als eine rechteckige Lasche 12 mit einer darin angeordneten, vorzugsweise rechteckförmigen, Durchgangsöffnung 16 ausgebildet. Die Öffnung kann umfänglich geschlossen (siehe Fig. 5) oder offen/geschlitzt (siehe insbesondere Fig. 1) sein Die Lasche 12 erstreckt sich in Kupplungsposition in Höhenrichtung H des Basiselementes 2 von einer unteren Kante des Spannbügels 8, die dem, dem Kupplungskopf KK gegenüberliegenden Ende der Kugelkopf-Anhängerkupplung K bzw. dem Boden zugewandt ist, zu dem, dem Kupplungskopf KK gegenüberliegenden Ende der Kugelkopf-Anhängerkupplung K bzw. zum Boden hin. Die Lasche 12 ist vorliegend stoffeinstückig mit dem Spannbügel 8 ausgebildet. Genauer gesagt bildet die Lasche 12 einen Abschnitt des Spannbügels 8 aus, kann aber auch an diesen gekoppelt (genietet, geschraubt, geschweißt) sein.

Die zweite Eingriffsstruktur ist als Zapfen oder Haken 14 bzw. hakenförmiger Vorsprung am Sicherungshebel 10 ausgebildet. Der Zapfen oder Haken 14 (nachfolgend nur noch als Haken bezeichnet) erstreckt sich im vollständigen Kupplungszustand in Querrichtung Q des Basiselementes 2 und ragt von dem Sicherungshebel 10 weg in Richtung hin zum Kugelkopf KK bzw. hin zum Spannbügel 8. Der Haken 14 ragt im vollständigen Kupplungszustand vorzugsweise als einziger Abschnitt des Sicherungshebels 10 unter den Kugelkopf KK. Es kann aber auch der gesamte Sicherungshebel 10 unter den Kugelkopf KK greifen. Die Durchgangsöffnung 16 ist so dimensioniert, dass sie den Haken 14 aufnehmen kann. Vorzugsweise ist die Durchgangsöffnung 16 breiter als der Haken 14 ausgebildet, um ein Verhaken bei in- oder außer Eingriff kommen zu vermeiden. Der Haken 14 ragt im vollständigen Kupplungszustand durch die Durchgangsöffnung 16 zur Kugelkopf-Anhängerkupplung K hin durch. Die erste Eingriffsstruktur bzw. die Lasche 12 erstreckt sich im vollständigen Kupplungszustand in Höhenrichtung H des Basiselementes 2. Wie zuvor erwähnt, erstreckt sich die zweite Eingriffsstruktur bzw. der Haken 14 im Kupplungszustand in Querrichtung Q des Basiselementes 2 in Richtung hin zum Kupplungshals. Damit erstrecken sich die erste Eingriffsstruktur und die zweite Eingriffsstruktur im Kupplungszustand senkrecht zueinander. Der Haken 14 ist vorzugsweise stoffeinstückig mit dem Sicherungshebel 10 ausgebildet. Genauer gesagt bildet der Haken 14 in diesem Fall einen Abschnitt des Sicherungshebels 10 aus.

Der Sicherungshebel 10 weist ferner einen Anschlag 18 auf. Der Anschlag 18 hat einen im Wesentlichen rechteckförmigen Grundkörper mit abgerundeten Kanten. Der Anschlag 18 ist vorzugsweise separat von dem Sicherungshebel 10 ausgebildet. Er ist auf den Sicherungshebel 10 bevorzugt wie auf eine Schiene aufgeschoben und klemmt den Sicherungshebel 10 in Höhenrichtung H zwischen sich reib- und/oder Formschlüssig ein. Der Anschlag 18 bildet eine Verlängerung des Sicherungshebels 10 aus. Genauer gesagt erstreckt sich der Anschlag 18 im Kupplungszustand entlang einer äußeren Kante des Sicherungshebels 10 in die Längsrichtung L. Dabei erstreckt sich der Anschlag 18 über die äußere Kante des Sicherungshebels 10 hinaus in Richtung zum Fahrzeug hin. Der Anschlag 18 dient somit auch als manuelles Eingriffselement zur (manuellen) Betätigung des Sicherungshebels 10

Eine Welle (Stift, Bolzen) 20, die an der Spannbacke 6 oder am Basiselement 2 fixiert/fixierbar ist, bildet die zweite Schwenkachse S2 für der Sicherungshebel 10 aus. Das heißt, dass sich der Sicherungshebel 10 um die Welle 20 (horizontal) drehen/schwenken lässt. Der Sicherungshebel 10 ist über die Welle 20 an der Spannbacke 6 bzw. dem Basiselement 2 gelagert.

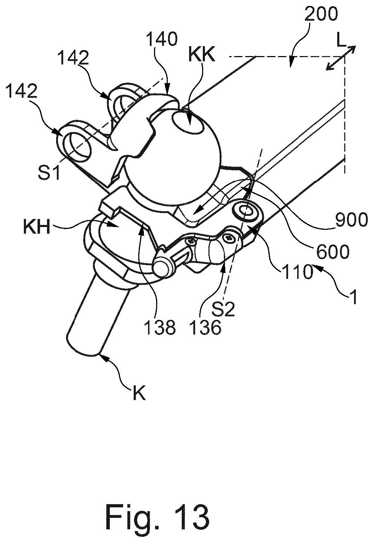

Weiterhin ist in Fig.1 zu erkennen, dass die Spannbacke 6 einen, insbesondere teilkugelförmigen oder schalen-/kalottenförmigen, Kugelkopf-Kupplungsabschnitt 22, der zum (teilweisen) Umschließen des Kugelkopfes KK der Kugelkopf-Anhängerkupplung K des Fahrzeugs ausgebildet ist sowie einen, an der vorderen Stirnseite des Basiselements 2 sich ausbildenden (Stütz-)Kragen oder Kragenplatte aufweist (siehe beispielsweise Fig. 13), welche zum Abstützen des Basiselements 2 am Kupplungshals der fahrzeugseitigen Anhängerkupplung unterhalb des Kugelkopfs KK vorgesehen und ausgebildet ist. Zusammen mit dem Spannbügel 8 umgreift der Kugelkopf-Kupplungsabschnitt 22 im vollständigen Kupplungszustand den gesamten Umfang des Kugelkopfes KK.

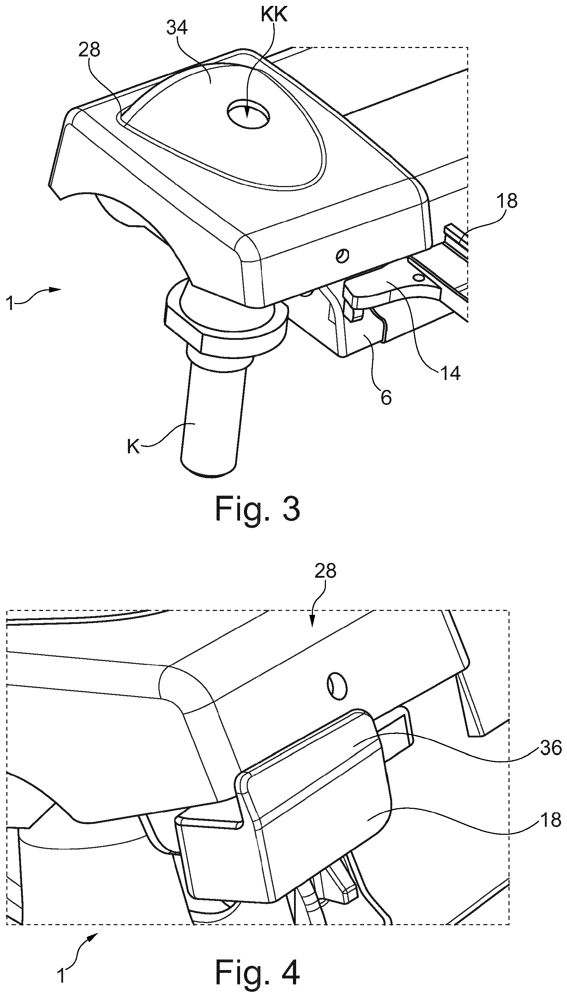

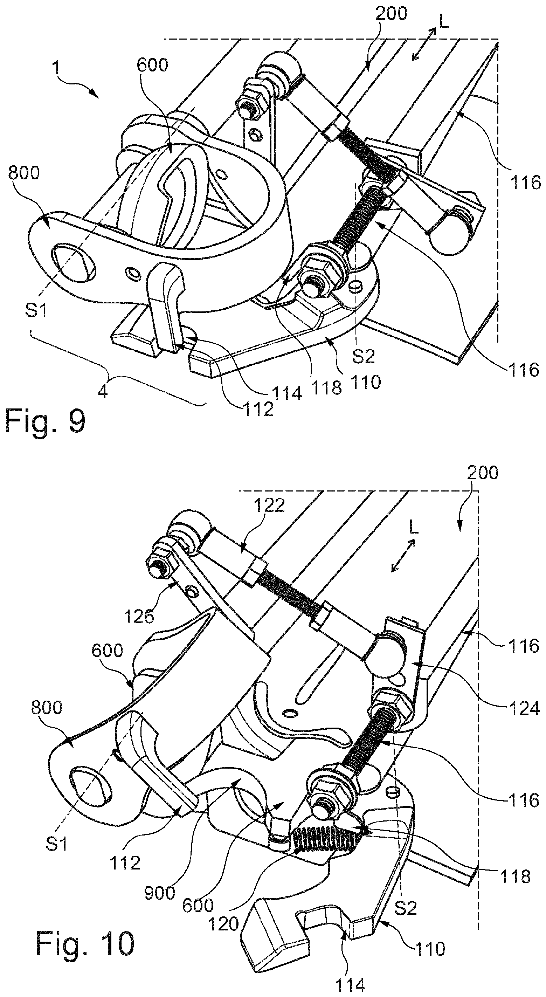

Es ist zudem erkennbar, dass die Spannbacke 6 an seinem kalottenförmigen Kugelkopf-Kupplungsabschnitt 22 zwei (in Längsrichtung L voneinander beabstandete) Antriebswellenaufnahmeösen 24 aufweist. Die Antriebswellenaufnahmeösen 24 erstrecken sich vertikal senkrecht zur Längsrichtung L des Basiselementes 2. Die Antriebswellenaufnahmeösen 24 sind dazu ausgebildet eine hier nicht dargestellte und sich in Längsrichtung L des Basiselementes 2 erstreckende (horizontale) Antriebswelle relativ drehend (drehbar lagernd) aufzunehmen, welche ebenfalls in Aufnahmelöcher 26 (s. Fig. 3) am Spannbügel 8 einführbar ist. Mithilfe der Antriebswellenaufnahmelöcher 24 und der Antriebswelle kann der Spannbügel 8 also mit der Spannbacke 6 schwenkgekoppelt werden. Diese Antriebswelle bildet dann die erste Schwenkachse S1 (siehe beispielsweise Fig. 9) des Spannbügels 8 aus. Gleichzeitig dient die Antriebswelle dazu eine Zug- /Spannkraft auf den Spannbügel 8 auszuüben (beispielsweise mittels eines Exzentergetriebes), mit welcher der Spannbügel 8 den Kugelkopf KK zwischen sich und dem Kugelkopf-Kupplungsabschnitt 22 einspannt.

Fig. 2 ist eine Perspektivdarstellung des Lastenheckträgers 1 im (vollständigen) Kupplungszustand von schräg unten. Von (schräg) unten bedeutet eine Blickrichtung vom Erdboden zum Lastenheckträger 1 hin. Im Unterschied zu Fig. 1 ist hier zusätzlich noch ein (Kunststoff-)Deckel 28 dargestellt, der an dem Spannbügel 8 angeordnet ist. Der Deckel 28 liegt auf der oberen Kante des Spannbügels 8, die dem Erdboden abgewandt ist, auf, bzw. ist an diesem fixiert. Der Deckel 28 umgreift eine im Kupplungszustand dem Kupplungskopf KK abgewandte Außenfläche des Spannbügels 8. Dazu weist der Deckel 28 einen zumindest abschnittsweise vorgesehenen, teilkreisförmigen Umgreifrand oder Umgreifschild 30 auf, der zumindest abschnittsweise an der Außenfläche des Spannbügels 8 anliegt. Der Deckel 28 ist entweder so bemessen, dass er auf der Spannbügel 8 mittels des Umgreifrands 30 geklemmt ist, d.h. kraftschlüssig mit diesem verbunden ist, oder mit diesem formschlüssig, bspw. durch eine Schraubverbindung, verbunden ist. Alternativ dazu kann der Deckel 28 aber auch stoffschlüssig mit dem Spannbügel 8 verbunden sein. Auf jeden Fall ist der Deckel 28 so mit dem Spannbügel 8 verbunden, dass sich der Deckel 28 zusammen mit dem Spannbügel 8 um die erste Schwenkachse S1 schwenken lässt.

Zudem ist in Fig. 2 zu erkennen, dass der Anschlag 18 an dem Abschnitt des Umgreifrands 30, der im vollständigen Kupplungszustand dem Sicherungshebel 10 zugewandt ist, anliegt. Genauer gesagt schlägt der Anschlag 18 an diesem Abschnitt des Umgreifrands 30 an. Im Kupplungselement liegt somit der Umgreifrand 30 zwischen der Außenfläche des Spannbügels 8 und dem Anschlag 18. Dieser Abschnitt des Umgreifrands 30 begrenzt die Schwenkbewegung des Sicherungshebels 10 um die Schwenkachse S2 in Richtung zur Kugelkopf-Anhängerkupplung K. Im Kupplungszustand ragt ein vorspringender Abschnitt des Deckels 28 in Querrichtung Q, insbesondere vollständig, über den Anschlag 18, um dieser oberseitig zu verdecken (siehe hierzu insbesondere Fig. 2).

Weiterhin ist in Fig. 2 zu erkennen, dass von der Spannbacke 6 insbesondere vom Basiselement-seitigen Stützkragen ein sich in Querrichtung Q erstreckender Vorsprung 32 hervorragt. Dieser Vorsprung 32 nimmt die Welle 20 auf. Auf dem Vorsprung 32 liegt somit auch ein Abschnitt des Sicherungshebels 10 auf. Gleichzeitig dient der (laschenförmige) Vorsprung 32 vorzugsweise auch als fixe Anlenkstelle für eine nicht weiter dargestellte Feder, welche den Sicherungshebel 10 in Richtung zum Kupplungshals KH der fahrzeugseitigen Anhängerkupplung K vorspannt.

Fig. 3 ist eine Perspektivansicht des Lastenheckträgers 1 von schräg oben, bei dem der Spannbügel 8 den Kupplungskopf KK umgreift. Der Sicherungshebel 10 ist hier zu Darstellungszwecken nicht im Eingriff mit dem Spannbügel 8. In Fig. 3 ist der Deckel 28 von oben zu erkennen. In dem Bereich des Deckels 28, der oberhalb des Kugelkopfes KK angeordnet ist, ist eine schalenförmige, vom Kugelkopf KK weg konvex gekrümmte Erhebung 34 vorgesehen. Grund dafür ist, dass der Kugelkopf KK in Höhenrichtung über die obere Kante des Spannbügels 8 in Richtung hin zum Deckel 28 vorragt. Damit der Deckel 28, der aus Stabilitätsgründen auf der oberen Kante des Spannbügels 8 aufliegt, trotzdem über den Kupplungskopf KK klapp-/schwenkbar ist, ist die kuppelartige Erhebung 34 im Deckel 28 vorgesehen. Diese schafft genügend Raumvolumen unterhalb des Deckels 28 zum Aufnehmen des Kugelkopfes KK im Kupplungszustand.

Fig. 4 ist eine perspektivische Detailansicht des Lastenheckträgers 1 im Kupplungszustand, die eine alternative Ausführungsform des Anschlags 18 des Sicherungshebels 10 zeigt. Es ist hier zu erkennen, dass der Anschlag 18 eine in Höhenrichtung nach oben (vom Boden weg) ragende Kante 36 aufweist. Die Kante 36 ist insbesondere stoffeinstückig mit dem Anschlag 18 ausgebildet. Die Kante 36 bildet vorzugsweise einen Abschnitt des Anschlags 18 aus. Im Kupplungszustand liegt die Kante 36 an einer Vorderkante des Deckels 28, die im Kupplungszustand dem Sicherungshebel 10 zugewandt ist und sich in Längsrichtung L erstreckt, an. Damit begrenzt in der alternativen Ausführungsform des Anschlags 18 die Vorderkante des Deckels 28 in Kooperation mit der Kante 36 eine Schwenkbewegung des Sicherungshebels 10 zur Kugelkopf-Anhängerkupplung K hin.

Fig. 5 ist eine Perspektivdarstellung des Spannbügels 8 von außen. Genauer gesagt ist hier gut die Außenumfangsfläche des Spannbügels 8 zu erkennen, die auch im Kupplungszustand nicht im Kontakt mit dem Kugelkopf KK ist. Es ist gut zu erkennen, dass der Spannbügel 8 als U-förmiger Spannbügel ausgebildet ist. Weiterhin sind gut die Aufnahmelöcher 26 in den beiden Endabschnitten (des Us) des Spannbügels 8 zu erkennen. In dem Spannbügel 8 sind mehrere, genauer gesagt drei, zweite Durchgangsbohrungen 38 vorgesehen. Diese zweiten Durchgangsbohrungen 38 sind dazu ausgebildet und vorgesehen, (nicht dargestellte) Verbindungselemente, z.B. Schrauben, Bolzen oder Nieten, zur Verbindung mit dem Umgreifrand 30 des Deckels 28 aufzunehmen. Dazu muss der Deckel 28 so auf dem Spannbügel 28 angeordnet sein, dass die ersten Durchgangsbohrungen 31 im Umgreifrand 30 mit den zweiten Durchgangsbohrungen 38 am Spannbügel 8 fluchten. Dann kann ein Verbindungselement in die Durchgangsbohrungen 31, 38 eingeführt werden, sodass Deckel 28 und der Spannbügel 8 schwenkfest miteinander verbunden sind.

Fig. 5 zeigt außerdem, dass die Lasche 12 mittig an der U-förmigen Biegung des Spannbügels 8 angeordnet ist.

Fig. 6 ist eine Perspektivendarstellung des Sicherungshebels 10 von schräg oben. Der Sicherungshebel 10 wird durch eine, in Draufsicht im Wesentlichen T-förmig ausgebildete Platte gebildet. Der Sicherungshebel 10 weist mittig den Haken oder Zapfen/Lasche 14 auf. Weiterhin weist der Sicherungshebel 10 an einem Endabschnitt einen ösenförmigen Kupplungsabschnitt 39 auf, in dem ein Wellenaufnahmeloch 40 zur Aufnahme der Welle 20 vorgesehen ist. An der dem Kupplungsabschnitt 39 gegenüberliegenden Endabschnitt weist der Sicherungshebel 10 einen Anschlag-Kopplungsabschnitt 42 auf. Dieser Anschlag-Kopplungsabschnitt 42 ist dazu vorgesehen und ausgebildet, mit dem Anschlag 18 gekoppelt zu sein. Der mittig angeordnete Haken 14 erstreckt sich im Wesentlichen senkrecht zu dem Anschlag-Kopplungsabschnitt 42. Alle Ecken bzw. Kanten des Sicherungshebels 10 sind zur Verminderung eines Verletzungsrisikos bevorzugt abgerundet.

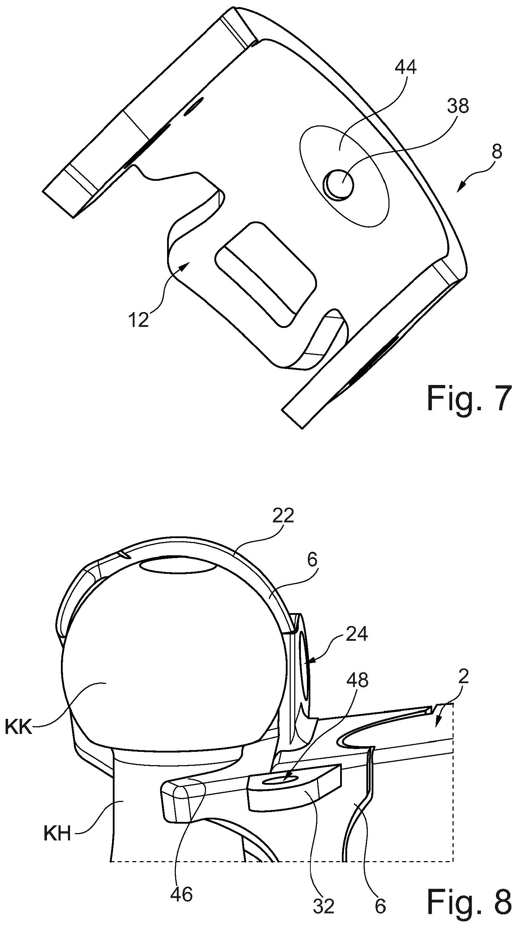

Fig. 7 ist eine Perspektivdarstellung des Spannbügels 8 von innen. Genauer gesagt ist in Fig. 7 gut die Innenfläche des Spannbügels 8 zu erkennen, die im Kupplungszustand am Kupplungskopf KK anliegt. In die Innenfläche des Spannbügels 8 ist eine, insbesondere ellipsenförmige, Vertiefung oder Ausbuchtung 44 eingebracht. Diese Ausbuchtung 44 ist so ausgebildet, dass sie im Kupplungszustand die Kontaktfläche zwischen Kugelkopf KK und Spannbügel 8 erhöht. Somit sorgt die Ausbuchtung 44 dafür, dass im vollständigen Kupplungszustand eine Spannkraft zwischen Spannbügel 8 und Spannbacke 6, genauer gesagt dem Kugelkopf-Kupplungsabschnitt 22 der Spannbacke 6, erhöht ist. Die Ausbuchtung 44 ist in Höhenrichtung H betrachtet mit der Lasche 12 in einer Linie vorgesehen. Genauer gesagt befindet sich die Ausbuchtung 44 mittig der U-förmigen Biegung des Spannbügels 8. Die Ausbuchtung 44 ist dabei insbesondere an einem Abschnitt (der Innenfläche) des Spannbügels 8 vorgesehen, der dem Kugelkopf-Kupplungsabschnitt 22 gegenüberliegt. Eine der zweiten Durchgangsbohrungen 38, insbesondere genau die zweite Durchgangsbohrung 38, die zwischen den anderen beiden zweiten Durchgangsbohrungen 38 liegt, durchbricht die Ausbuchtung 44 (mittig).

Fig. 8 ist eine Perspektivdarstellung der Spannbacke 6 im die fahrzeugseitige Kugelkopf-Anhängerkupplung K umgreifenden Zustand. In anderen Worten entspricht der in Fig. 8 dargestellte Zustand, in dem der Spannbügel (noch) keinen (festspannenden) Kontakt mit der fahrzeugseitigen Kugelkopf-Anhängerkupplung K hat, und nur die Spannbacke 6 die fahrzeugseitige Kugelkopf-Anhängerkupplung K umgreift, einem Einkupplungszustand. Es ist insbesondere in der Fig. 8 gut zu erkennen, dass die Spannbacke 6 den Stützkragen 46 aufweist. Der Stützkragen 46 ist teilkreisförmig bzw. kreisbogenförmig ausgebildet. Der Stützkragen 46 umgreift den Abschnitt des Kupplungshalses KH, der dem Basiselement 2 zugewandt ist. An der Spannbacke 6 in unmittelbarer Nähe zum Stützkragen 46 oder am Stützkragen 46 selbst ist der Vorsprung 32 vorgesehen. Es ist zu erkennen, dass in dem Vorsprung 32 eine Durchgangsbohrung 48 zur Aufnahme der Welle 20 (hier nicht dargestellt) vorgesehen ist. Zur Kupplung des Sicherungshebels 10 mit dem Vorsprung 32 über die Welle 20 muss der Sicherungshebel 10 so an dem Vorsprung 32 angeordnet sein, dass das Wellenaufnahmeloch 40 des Sicherungshebels 10 fluchtend mit der Durchgangsbohrung 48 am Vorsprung 32 ist. Der Vorsprung 32 erstreckt sich in die Querrichtung Q und ist bündig mit einer dem Erdboden abgewandten Oberseite der Spannbacke 6 bzw. des Stützkragens 46. Der Vorsprung 32 ragt von dem Stützkragen 46 oder der Spannbacke 6 hervor.

Weiterhin ist in Fig. 8 der Kugelkopf-Kupplungsabschnitt 22 zu erkennen. Der teilkugelförmig, insbesondere halbkugelförmig, ausgebildete Kugelkopf-Kupplungsabschnitt 22 umgreift im Einkupplungszustand (und auch im Kupplungszustand bzw. vollständig gekuppeltem Zustand) den ihm zugewandten Abschnitt des Kugelkopfes KK. Dabei schmiegt sich der Kugelkopf KK aufgrund der an den Kugelkopf KK angepassten Formgebung des Kugelkopf-Kopplungsabschnittes 22 an den Kugelkopf-Kopplungsabschnitt 22 an.

Das Basiselement 2 ist, wie es in den Figuren Fig. 1, Fig. 2 und Fig. 8 dargestellt ist, als eine Strebe bzw. ein Balken mit einem im Querschnitt geschlossenen Kastenprofil ausgebildet. Die Längsrichtung L des Basiselementes 2 entspricht einer Fahrzeuglängsrichtung. Eine Erstreckung horizontal senkrecht zur Längsrichtung des Basiselementes 2 bzw. eine Erstreckung in Querrichtung Q des Basiselementes 2 bedeutet damit eine Erstreckung in eine Fahrzeugbreitenrichtung. Eine Erstreckung vertikal senkrecht zur Längsrichtung des Basiselementes 2 bzw. eine Erstreckung in Höhenrichtung H des Basiselementes 2 bedeutet damit eine Erstreckung in eine Fahrzeughöhenrichtung.

Zum Kuppeln der fahrzeugseitigen Kugelkopf-Anhängerkupplung K mit der trägerseitigen Kupplung 4 wird zunächst die fahrzeugseitige Kugelkopf-Anhängerkupplung K mit der Spannbacke 6 in den Einkupplungszustand gekoppelt. Genauer gesagt wird der Kugelkopf KK auf den Stützkragen 46 aufgelegt, sodass der Kupplungshals KH der fahrzeugseitigen Kugelkopf-Anhängerkupplung K teilweise von dem Stützkragen 46 umschlossen wird. Gleichzeitig wird der Kugelkopf KK in den Kugelkopf-Kupplungsabschnitt 22 eingehängt. Somit wird der Einkupplungszustand realisiert. Danach wird der Spannbügel 8 in seine Kupplungsposition gebracht. Genauer gesagt wird der Spannbügel 8 um seine erste Schwenkachse S1 über den Kugelkopf KK geschwenkt, bis es seine Kupplungsposition erreicht. In der Kupplungsposition erstreckt sich die erste Eingriffsstruktur bzw. die Lasche 12 des Spannbügels 8 in Höhenrichtung H. Daraufhin wird der Sicherungshebel 10 um seine zweite Schwenkachse S2 zum Kupplungskopf KK hin geschwenkt, sodass die zweite Eingriffsstruktur (der Haken 14) in die erste Eingriffsstruktur, genauer gesagt in die Durchgangsöffnung 16, eingreift, bis der Anschlag 18 am Deckel 28 anschlägt / anliegt. Auf diese Weise wird der Kupplungszustand bzw. der vollständig gekuppelte Zustand realisiert.

Fig. 9 ist eine Perspektivdarstellung eines offenbarungsgemäßen Lastenheckträgers 1 nach einem weiteren Ausführungsbeispiel der Offenbarung. Dieser hat das Basiselement 200 und die zum Koppeln mit der Kugelkopf-Anhängerkupplung (hier nicht dargestellt) eines Fahrzeugs vorgesehenen Kupplung 400. Das Basiselement 200 erstreckt sich im Verwendungszustand (während Kopplung des Lastenheckträgers mit der Kugelkopf-Anhängerkupplung bzw. direkt davor und direkt danach) üblicherweise parallel zum Erdboden und in eine Fahrzeuglängsrichtung. Die Kupplung 400 befindet sich vorteilhafterweise an dem, dem Fahrzeug zugewandten Axialende des Basiselements 200. Die Kupplung 400 weist ein an dem Basiselement 200 bewegungsfest fixiertes Lager-Kupplungselement 600, ein relativ zum Lager-Kupplungselement 600 schwenkbares erstes Spannkupplungselement 800, das um eine sich in die Längsrichtung L des Basiselements 200 erstreckende erste Schwenkachse S1 schwenkbar ist, sowie ein relativ zum Lager-Kupplungselement 600 schwenkbares zweites Spannkupplungselement 110 auf, das um eine sich vertikal senkrecht zur Längsrichtung L des Basiselementes 2 erstreckende zweite Schwenkachse S2 schwenkbar ist. Die zweite Schwenkachse S2 erstreckt sich dabei senkrecht zur ersten Schwenkachse S1.

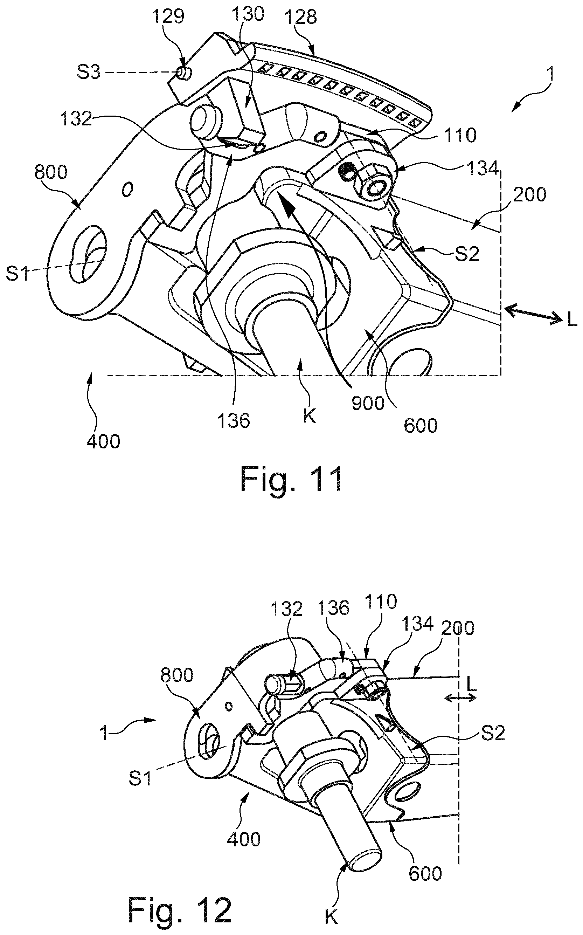

In Fig. 1 spannen das erste Spannkupplungselement 800 und das Lager-Kupplungselement 600 zwischen sich in dem vollständig gekuppelten Zustand (nachfolgend vereinfacht als "Kupplungszustand" bezeichnet) einen Kugelkopf bzw. Kupplungskopf der fahrzeugseitigen Kupplung (nicht dargestellt) ein. Im Kupplungszustand untergreift das zweite Spannkupplungselement 110 außerdem bezüglich des Lager-Kupplungselementes 600 und des ersten Spannkupplungselementes 800 den Kupplungskopf und hintergreift bezüglich des Basiselementes 2 einen Kupplungshals der fahrzeugseitigen Kupplung (s. auch Fig. 12).

Weiterhin ist an dem Basiselement 200 ein Stützkragen 900 (s. dazu Fig. 10) fixiert. Genauer gesagt weist dabei das Lager-Kupplungselement 600 den Stützkragen 900 auf. An dem Stützkragen 900 ist das zweite Spannkupplungselement 110 positioniert. Im Kupplungszustand wird dabei der Kupplungshals vom zweiten Spannkupplungselement 110 und vom Stützkragen 900 vollständig umschlossen (s. Fig. 12).

Im Kupplungszustand sind das erste Spannkupplungselement 800 und das zweite Spannkupplungselement 110 im Rasteingriff miteinander, wie in Fig. 9 dargestellt. Nachfolgend wird die Position des ersten bzw. zweiten Spannkupplungselementes 800, 110 im Kupplungszustand als "Kupplungsposition" (des jeweiligen Spannkupplungselementes 800, 110) bezeichnet.

Beim Rasteingriff verhindert das erste Spannkupplungselement 800 ein Schwenken des zweiten Spannkupplungselementes 110 um die zweite Schwenkachse S2. Dazu weist das erste Spannkupplungselement 800 an seiner dem zweiten Spannkupplungselement 110 zugewandten Seite eine erste Eingriffsstruktur, dieses maljedoch in Form von einem Vorsprung bzw. Rastzahn 112 auf. Das zweite Spannkupplungselement 110 weist an seiner dem ersten Spannkupplungselement 800 zugewandten Seite eine zweite Eingriffsstruktur, dieses mal in Form von einer Aufnahme bzw. Kerbe 114 auf, die komplementär zum Vorsprung 112 ausgebildet ist und mit diesem im Kupplungszustand im Rasteingriff ist. Der Vorsprung 112 befindet sich an der dem Fahrzeug zugewandten Seite des ersten Spannkupplungselementes 800 und erstreckt sich vertikal senkrecht vom ersten Spannkupplungselement 110 (nach unten) weg. Die Aufnahme 114 befindet sich auf der im Kupplungszustand dem Fahrzeug zugewandten Seite des zweiten Spannkupplungselementes 110. Der Vorsprung 112 greift im Kupplungszustand zur Realisierung des Rasteingriffs von oben und außen in die Aufnahme 114 ein.

Weiterhin weist der Lastenheckträger 1 eine Antriebswelle 116 auf, die sich in die Längsrichtung L des Basiselementes 200 erstreckt und die an ihrem der Kupplung 400 zugewandten Endabschnitt ein drehfest mit der Antriebswelle verbundenes nockenförmiges Zwischenelement 118 aufweist. Das Zwischenelement 118 ist zwischen dem Stützkragen 900 und dem zweiten Spannkupplungselement 110 angeordnet. Das Zwischenelement 118 überträgt eine Rotation der Antriebswelle 116 um deren Längsachse auf das zweite Spannkupplungselement 110, um ein Schwenken des zweiten Spannkupplungselementes 110 um die zweite Schwenkachse S2 zumindest in die Nicht-Kupplungsposition zu ermöglichen. Die Antriebswelle 116 kann dabei manuell rotiert werden.

Für ein Schwenken des zweiten Spannkupplungselementes 110 um die zweite Schwenkachse S2 muss ausgehend vom Kupplungszustand (wie in Fig. 9 gezeigt) zuerst der Rasteingriff gelöst werden. Zunächst muss also der Vorsprung 112 aus der Aufnahme 114 bewegt werden. Ausgehend von der Kupplungsposition des ersten Spannkupplungselementes 800 wird dazu das erste Spannkupplungselement 800 um die erste Schwenkachse S1 in eine Richtung vom zweiten Spannkupplungselement 110 weggeschwenkt. Sobald der Rasteingriff gelöst ist, ist ein Schwenken des zweiten Spannkupplungselementes 110 um die zweite Schwenkachse S2 in eine Richtung weg vom ersten Spannkupplungselement 800 möglich. Ausgehend von der Kupplungsposition des zweiten Spannkupplungselementes 110 drückt das Zwischenelement 118 bei einer Rotation der Antriebswelle 116 um ihre Längsachse (eine Rotation der Antriebswelle 116 gegen den Uhrzeigersinn bei Betrachtung ausgehend von der dem Fahrzeug zugewandten Seite der Kupplung 400 in Längsrichtung des Basiselementes 200) gegen die dem Stützkragen 900 zugewandte Seite des zweiten Spannkupplungselementes 110. Somit wird das zweite Spannkupplungselement 110 mithilfe der Rotation der Antriebswelle 116, die über das Zwischenelement 118 als Schiebebewegung auf das zweite Spannkupplungselement 110 übertragen wird, ausgehend von seiner Kupplungsposition in eine dem ersten Spannkupplungselement 800 abgewandte Richtung geschwenkt.

Fig. 10 ist eine Perspektivdarstellung des Lastenheckträgers 1 und zeigt einen Freigabezustand (Nicht-Kupplungszustand) der Kupplung 400. Im Freigabezustand kann eine Kugelkopf-Anhängerkupplung (hier nicht dargestellt) von der Kupplung 400 aufgenommen werden / in die Kupplung 400 eingeführt werden. In Fig. 10 ist der Freigabezustand dargestellt, in dem das erste Spannkupplungselement 800 und das zweite Spannkupplungselement 110 jeweils einen maximalen Schwenkwinkel (bzw. Entfernung vom) relativ zum Stützkragen 900 haben. Nachfolgend wird die Position des ersten bzw. zweiten Spannkupplungselementes 800, 110 im Freigabezustand als "Freigabeposition" bezeichnet. Im Freigabezustand drückt das Zwischenelement 118 gegen die dem Stützkragen 900 zugewandte Seite des zweiten Spannkupplungselementes 110.

In Fig. 10 ist zu erkennen, dass zwischen dem Stützkragen 900 und dem zweiten Spannkupplungselement 110 ein Vorspannelement 120 angeordnet ist, das im hier dargestellten Freigabezustand gespannt ist. Das Vorspannelement 120 ist hier als (Spiral-)Feder ausgeführt. Zum Überführen der Kupplung 400 vom Freigabezustand in den Kupplungszustand wird die Antriebswelle 116 um ihre Längsachse rotiert (eine Rotation der Antriebswelle 116 im Uhrzeigersinn bei Betrachtung ausgehend von der dem Fahrzeug zugewandten Seite der Kupplung 400 in Längsrichtung des Basiselementes 200). Damit bewegt sich das Zwischenelement 118 vom zweiten Spannkupplungselement 10 weg und hin zum Stützkragen 900. Das Vorspannelement 120 zieht sich, sobald das Zwischenelement 118 nicht mehr gegen das zweite Spannkupplungselement 110 drückt, zusammen. Somit wird das zweite Spannkupplungselement 110 aus dem Freigabezustand in eine Richtung zum Stützkragen 900 hin um die zweite Schwenkachse S2 geschwenkt. Wurde die Antriebswelle 116 so weit rotiert, dass das Zwischenelement 118 das zweite Spannkupplungselement 110 nicht mehr kontaktiert, ist das Vorspannelement 120 im entspannten Zustand und das zweite Spannkupplungselement 110 ist in der Kupplungsposition.

Beim Übergang der Kupplung 400 vom Freigabezustand (Fig. 10) in den Kupplungszustand (Fig. 9) sollte zuerst das zweite Spannkupplungselement 110 (vor dem ersten Spannkupplungselement 800) seine Kupplungsposition erreichen. Beim Übergang der Kupplung 4 vom Kupplungszustand (Fig. 9) in den Freigabezustand (Fig. 10) sollte zuerst das erste Spannkupplungselement 800 (vor dem zweiten Spannkupplungselement 110) aus seiner Kupplungsposition bewegt werden.

Das Schwenken des ersten Spannkupplungselementes 800 um die erste Schwenkachse S1 und des zweiten Spannkupplungselementes 110 um die zweite Schwenkachse S2 zwischen Kupplungszustand und Freigabezustand kann in einer ersten Ausführungsform unabhängig voneinander / in zwei separaten Schritten erfolgen. Das Schwenken des ersten Spannkupplungselementes 800 um die erste Schwenkachse S1 und des zweiten Spannkupplungselementes 110 um die zweite Schwenkachse S2 zwischen Kupplungszustand und Freigabezustand kann aber in einer zweiten Ausführungsform (nachstehend näher ausgeführt) auch miteinander gekoppelt sein. In dieser zweiten Ausführungsform, wie sie in Fig. 9 und Fig. 10 dargestellt ist, ist ein axialer Endabschnitt eines Bewegungsübertragungselementes 122 drehfest mit der Antriebswelle 116 gekoppelt und der andere axiale Endabschnitt des Bewegungsübertragungselementes 122 ist bewegungsfest mit dem ersten Spannkupplungselement 800 gekoppelt. Eine Rotation der Antriebswelle 116 um deren Längsachse wird über das Bewegungsübertragungselement 122 auf das erste Spannkupplungselement 800 übertragen, um ein Schwenken des ersten Spannkupplungselementes 800 um die erste Schwenkachse S1 zu ermöglichen. Somit wird unter Zuhilfenahme des Bewegungsübertragungselementes 122 bei einer Rotation der Antriebswelle 116 um ihre Längsachse (simultan/ in synchronisierter Weise) das erste Spannkupplungselement 800 um die erste Schwenkachse S1 und das zweite Spannkupplungselement 110 um die zweite Schwenkachse S2 geschwenkt.

Vorteilhafterweise ist das Bewegungsübertragungselement 122 über einen ersten Zwischenhebel 124 mit der Antriebswelle 116 verbunden. Dabei ist der erste Zwischenhebel 124 drehfest mit der Antriebswelle 116 verbunden und der eine axiale Endabschnitt des Bewegungsübertragungselements 122 ist bewegungsfest / starr mit dem ersten Zwischenhebel 124 verbunden. Wenn das Bewegungsübertragungselement 122 über den ersten Zwischenhebel 124 mit der Antriebswelle 116 verbunden ist, hat der axiale Endabschnitt des Bewegungsübertragungselementes einen Abstand von der Längsachse der Antriebswelle 116. Der erste Zwischenhebel 124 erstreckt sich senkrecht zur Längsachse der Antriebswelle 116.

Weiter vorteilhafterweise ist zusätzlich (oder alternativ) dazu ein zweiter Zwischenhebel 126 bewegungsfest / starr mit dem anderen axialen Endabschnitt des Bewegungsübertragungselementes 122 verbunden. Gleichzeitig ist der zweite Zwischenhebel 126 bewegungsfest / starr mit dem ersten Spannkupplungselement 800 verbunden. Der zweite Zwischenhebel 126 ragt dabei von dem ersten Spannkupplungselement 800, insbesondere senkrecht, hervor. Der erste und der zweite Zwischenhebel 124, 126 sind jeweils so dimensioniert und insbesondere so aufeinander abgestimmt, dass das Schwenken des ersten Spannkupplungselementes 800 um die erste Schwenkachse S1 und des zweiten Spannkupplungselementes 110 um die zweite Schwenkachse S3 sanft / reibungsarm verläuft. Die Zwischenhebel 124, 126 sind dabei so dimensioniert, dass beim Übergang der Kupplung 400 vom Freigabezustand (Fig. 2) in den Kupplungszustand (Fig. 1) zuerst das zweite Spannkupplungselement 110 seine Kupplungsposition erreicht und beim Übergang der Kupplung 400 vom Kupplungszustand (Fig. 9) in den Freigabezustand (Fig. 10) zuerst das erste Spannkupplungselement 8 aus seiner Kupplungsposition bewegt wird.

Fig. 11 ist eine Perspektivdarstellung des Lastenheckträgers 1 von schräg unten. Fig. 11 stellt einen Zustand des Lastenheckträgers 1 dar, in dem dessen Kupplung 400 im Kupplungszustand mit einer Kugelkopf-Anhängerkupplung K eines Fahrzeugs ist. Zusätzlich zu dem Lastenheckträger 1, wie er in Fig. 9 und Fig. 10 dargestellt sind, weist der in Fig. 11 gezeigte Lastenheckträger 1 ein Sicherungselement 128 auf. Das Sicherungselement 128 ist am ersten Spannkupplungselement 800 schwenkbar zu diesem angeordnet. Dabei ist das Sicherungselement 128 um eine sich in die Längsrichtung des Basiselements erstreckende dritte Schwenkachse S3 schwenkbar. Die dritte Schwenkachse S3 erstreckt sich parallel zur ersten Schwenkachse S1 und damit senkrecht zur zweiten Schwenkachse S2. Hier ist eine bewegungsfest / starr mit dem ersten Spannkupplungselement 800 verbundene Abdeckung, die eine Schwenkaufnahme für das Sicherungselement 128 ausbildet, nicht dargestellt. Damit das Sicherungselement 128 um die Schwenkachse S3 schwenkbar ist, weist das Sicherungselement 128 an seinen axialen Endabschnitten jeweils einen Schwenkhaken 129 auf. Der Schwenkhaken 129 ist in die Schwenkaufnahme der (nicht dargestellten und) mit dem ersten Spannkupplungselement 110 mitbewegbar verbundenen Abdeckung einsetzbar.

Das Sicherungselement 128 weist einen Rasthaken 130 auf, der im Kupplungszustand dem zweiten Spannkupplungselement 110 zugewandt ist und im Kupplungszustand das zweite Spannkupplungselement10, insbesondere eine Hinterschneidung 132 am zweiten Spannkupplungselement 110, umgreift. Damit verhindert der Rasthaken 130 im Kupplungszustand ein Schwenken des zweiten Spannkupplungselementes 110 um die zweite Schwenkachse S2. Wenn die Kupplung 400 vom Kupplungszustand in den Freigabezustand überführt werden soll, muss zunächst das Sicherungselement 128 um die dritte Schwenkachse S3 in eine Richtung weg von dem zweiten Spannkupplungselement 110 geschwenkt werden, um den Rasthaken von dem zweiten Spannkupplungselement 110 zu lösen. Erst danach kann der Rasteingriff zwischen dem ersten Spannkupplungselement 800 und dem zweiten Spannkupplungselement 110 gelöst werden (wie es zuvor beschrieben wurde).

Weiterhin ist in Fig. 11 eine gelenkartige Verbindung 134 dargestellt, über welche das zweite Spannkupplungselement 110 mit dem Stützkragen 900 relativ schwenkbar zu diesem verbunden ist.

Außerdem ist bei dem Lastenheckträger 1, wie er in Fig. 11 aber auch in Fig. 12 und Fig. 13 dargestellt ist, die Antriebswelle 116 und die Verbindung der Antriebswelle 116 mit dem zweiten Spannkupplungselement 110 (und mit dem ersten Spannkupplungselement 800) nicht dargestellt. Zusätzlich oder alternativ zu der Antriebswelle 116 kann das zweite Spannkupplungselement 110 direkt mit einem Hebel 136 verbunden sein. Dabei ist der Hebel 136 an dem zweiten Spannkupplungselement 110 bewegungsfest fixiert. Der Hebel 136 erstreckt sich entlang der Kontur des zweiten Spannkupplungselementes 110. Mithilfe von dem Hebel 136 kann das zweite Spannkupplungselement 110 um die zweite Schwenkachse S2 geschwenkt werden.

Fig. 12 ist eine Perspektivdarstellung des Lastenheckträgers 1 von schräg unten. Auch hier ist die Kupplung 400 des Lastenheckträgers 1 im Kupplungszustand mit einer Kugelkopf-Anhängerkupplung K eines Fahrzeugs dargestellt. In Fig. 12 entfällt im Vergleich zu Fig. 11 die Darstellung des Sicherungselementes 128. Das Lager-Kupplungselement 600, das erste Spannkupplungselement 800, der Stützkragen 900 und das zweite Spannkupplungselement 110 umgreifen im Kupplungszustand die Kugelkopf-Anhängerkupplung K.

In Fig. 12 ist gut der mit dem zweiten Spannkupplungselement 110 verbundene Hebel 136 zu erkennen. Die Hinterschneidung 132, in die der hier nicht dargestellte Rasthaken 130 des Sicherungselementes 128 eingreifen kann, ist am Hebel 136 ausgebildet. Auch hier ist deutlich die gelenkartige Verbindung 134 zu erkennen, die das zweite Spannkupplungselement 110 gelenkartig und schwenkbar mit dem Stützkragen 900 verbindet.

Fig. 13 ist eine Perspektivdarstellung des Lastenheckträgers 1 von schräg oben. Auch hier ist die Kupplung 400 des Lastenheckträgers 1 im Kupplungszustand mit einer Kugelkopf-Anhängerkupplung K eines Fahrzeugs dargestellt. Hier entfällt aus Gründen der Vereinfachung die Darstellung des ersten Spannkupplungselementes 800. Es ist zu erkennen, dass das zweite Spannkupplungselement 110 einen, insbesondere teilkreisförmigen oder kragenförmigen, Hals-Kupplungsabschnitt 138 aufweist, der zur Kupplung mit einem Kupplungshals KH der Kugelkopf-Anhängerkupplung K des Fahrzeugs ausgebildet ist. Das zweite Spannkupplungselement 110 und dessen Hals-Kupplungsabschnitt 138 sind so dimensioniert, dass der Hals-Kupplungsabschnitt 138 des zweiten Spannkupplungselementes 110 im Kupplungszustand eine dem Basiselement 200 gegenüberliegende Seite des Kupplungshalses KH der Kugelkopf-Anhängerkupplung K des Fahrzeugs, insbesondere vollständig, umgreift.

Weiterhin ist in Fig. 14 zu erkennen, dass der Stützkragen 900 als ein, insbesondere teilkreisförmiger oder kragenförmiger, Hals-Kupplungsabschnitt ausgebildet ist (s. auch Fig. 10), der zum Umgreifen einer dem Basiselement 200 zugewandten Seite des Kupplungshalses KH der Kugelkopf-Anhängerkupplung K des Fahrzeugs ausgebildet ist. Außerdem weist das Lager-Kupplungselement 600 einen, insbesondere teilkugelförmigen oder schalenförmigen, Kugelkopf-Kupplungsabschnitt 140 auf, der zum (teilweisen) Umschließen eines Kugelkopfes KK der Kugelkopf-Anhängerkupplung K des Fahrzeugs ausgebildet ist.

Es ist zudem erkennbar, dass das Lager-Kupplungselement 600 an seinem Kugelkopf-Kupplungsabschnitt 140 zwei Antriebswellenaufnahmeösen 142 aufweist. Die Antriebswellenaufnahmeösen 142 erstrecken sich horizontal senkrecht zur Längsrichtung des Basiselementes 200. Die Antriebswellenaufnahmeösen 142 sind dazu ausgebildet eine hier nicht dargestellte und sich in Längsrichtung L des Basiselementes 200 erstreckende Antriebswelle aufzunehmen, welche ebenfalls in Aufnahmelöcher am hier nicht dargestellten ersten Spannkupplungselement 800 einführbar ist. Mithilfe der Antriebswellenaufnahmelöcher 142 und einer Antriebswelle kann das erste Spannkupplungselement 800 also mit dem Lager-Kupplungselement 600 verbunden werden (vgl. Fig. 9 und Fig. 10).

Das erste Spannkupplungselement 800 kann als U-förmiger Spannbügel ausgebildet sein, wie es in Fig. 9 bis Fig. 12 dargestellt ist. Das erste Spannkopplungselement 800 ist in seine Kupplungsposition vorgespannt. Das heißt, es muss eine Kraft, die größer als die Vorspannungskraft des ersten Spannkopplungselementes 800 ist und dieser entgegengerichtet ist, auf das Spannkopplungselement 800 aufgebracht werden, um es aus seiner Kupplungsposition zu lösen. Das Basiselement 200 ist, wie es in allen Figuren Fig. 19 bis Fig. 13 dargestellt ist, als eine Strebe bzw. ein Balken mit einem im Querschnitt geschlossenen Kastenprofil ausgebildet. Die Längsrichtung L des Basiselementes 200 entspricht einer Fahrzeuglängsrichtung. Eine Erstreckung horizontal senkrecht zur Längsrichtung des Basiselementes 200 bedeutet damit eine Erstreckung in eine Fahrzeugbreitenrichtung. Eine Erstreckung vertikal senkrecht zur Längsrichtung des Basiselementes 200 bedeutet damit eine Erstreckung in eine Fahrzeughöhenrichtung.

## Patentansprüche

1. Lastenheckträger (1) mit einem Basiselement (2) und einer zum Koppeln mit einer Kugelkopf-Anhängerkupplung (K) eines Fahrzeugs vorgesehenen und ausgebildeten Kupplung (4), die ein an dem Basiselement (2) angeordnetes Lager-Kupplungselement (6) vorzugsweise in Form einer Spannbacke und ein relativ zum Lager-Kupplungselement (6) bewegbares erstes Spannkupplungselement (8) aufweist, das bei einem Kupplungsvorgang mit der fahrzeugseitigen Kugelkopf-Anhängerkupplung (K) dafür ausgebildet ist, einen fahrzeugseitigen Kugelkopf (KK) zwischen sich und Lager-Kupplungselement (6) einzuspannen, wobei ein zweites Spannkupplungselement (10), das beweglich, vorzugsweise schwenkbar am Basiselement (2) oder an der Kupplung (4) gelagert und derart bezüglich des Lager-Kupplungselements (6) am Basiselement (2) oder an der Kupplung (4) platziert ist, dass es bei dem Kupplungsvorgang mit Bezug zum Lager-Kupplungselement (6) in eine den Kugelkopf (KK) untergreifende Position relativbewegbar ist, **dadurch gekennzeichnet, dass** das erste Spannkupplungselement (8) in Form eines Spannbügels in einer den Kugelkopf (KK) umgreifenden Schwenkposition und das zweite Spannkupplungselement (10) in Form eines Sicherungshebels in einer zumindest abschnittsweise den Kupplungskopf (KK) untergreifenden Schwenkposition miteinander in Rasteingriff stehen, sodass die Kupplung (4) in einem vollständig gekuppelten Zustand ist und ein Verschwenken des Spannbügels (8) und/oder des Sicherungshebels (10) blockiert ist.

2. Lastenheckträger (1) gemäß Anspruch 1, **dadurch gekennzeichnet, dass** der Spannbügel (8) um eine erste Schwenkachse (S1) schwenkbar ist und zum Realisieren des Rasteingriffs eine erste Eingriffsstruktur (12, 16) aufweist, die gegenüberliegend und mit maximalem Abstand zu der ersten Schwenkachse (S1) an dem Spannbügel (8) angeordnet ist.

3. Lastenheckträger (1) gemäß Anspruch 2, **dadurch gekennzeichnet, dass** der Sicherungshebel (10) eine zweite Eingriffsstruktur (14) aufweist, die komplementär zur ersten Eingriffsstruktur (12, 16) ausgebildet ist.

4. Lastenheckträger (1) gemäß Anspruch 3, **dadurch gekennzeichnet, dass** die erste Eingriffsstruktur (12, 16) als eine von dem Spannbügel (8) hervorragende Lasche (12) mit Durchgangsöffnung (16) ausgebildet ist, und
dass die zweite Eingriffsstruktur (14) als von dem Sicherungshebel (10) hervorragender Haken (14) ausgebildet ist.

5. Lastenheckträger (1) gemäß Anspruch 4, **dadurch gekennzeichnet, dass** zum Realisieren des Rasteingriffs der Haken (14) des Sicherungshebels (10) in die Durchgangsöffnung (16) am Spannbügel (8) eingreift.

6. Lastenheckträger (1) gemäß einem der Ansprüche 3 bis 5, **dadurch gekennzeichnet, dass** die erste Eingriffsstruktur (12, 16) so am Spannbügel (8) angeordnet ist und die zweite Eingriffsstruktur (14) so am Sicherungshebel (10) angeordnet ist, dass der Rasteingriff zwischen Spannbügel (8) und Sicherungselement (10) unterhalb des Kugelkopfes (KK) erfolgt.

7. Lastenheckträger (1) gemäß einem der Ansprüche 1 bis 6, **dadurch gekennzeichnet, dass** der Spannbügel (8) an seiner Innenfläche, die in seiner den Kugelkopf (KK) umgreifenden Schwenkposition dem Kugelkopf (KK) zugewandt ist, zumindest eine, insbesondere ellipsenförmige, Vertiefung (44) aufweist, die im vollständig gekuppelten Zustand, insbesondere vollständig, am Kugelkopf (KK) anliegt.

8. Lastenheckträger (1) gemäß einem der Ansprüche 1 bis 7, **dadurch gekennzeichnet, dass** der Sicherungshebel (10) einen Anschlag (18) hat, der eine Schwenkbewegung des Sicherungshebels (10) zum Kugelkopf (KK) hin beschränkt.

9. Lastenheckträger (1) gemäß einem der Ansprüche 1 bis 8, **dadurch gekennzeichnet, dass** an dem Spannbügel (8) ein Deckel (28) angeordnet ist, der bewegungsfest mit dem Spannbügel (8) verbunden ist und in der den Kupplungskopf (KK) umgreifenden Schwenkposition des Spannbügels (8) einen Abschnitt des Kupplungskopfs (KK), der von dem Spannbügel (8), insbesondere oberhalb des Kupplungskopfes (KK), freigelassen ist, bedeckt.

10. Lastenheckträger gemäß Anspruch 7 und 8 oder 9, **dadurch gekennzeichnet, dass** der Anschlag (18) des Sicherungshebels (10) im vollständig gekuppelten Zustand am Deckel (28) anliegt.

11. Lastenheckträger (1) gemäß einem der Ansprüche 1 bis 9, **dadurch gekennzeichnet, dass** an der Spannbacke (6) ein Vorsprung (32) mit Durchgangsbohrung (48) zur Aufnahme einer Welle (20) vorgesehen ist, die den Sicherungshebel (10) an der Spannbacke (6) schwenkbar lagert.

12. Lastenheckträger (1) gemäß einem der Ansprüche 1 bis 11, **dadurch gekennzeichnet, dass** die Spannbacke (6) einen, insbesondere teilkugelförmigen oder schalenförmigen, Kugelkopf-Kupplungsabschnitt (22) aufweist, der zum Umschließen des Kugelkopfes (KK) ausgebildet ist.

13. Lastenheckträger (1) gemäß einem der Ansprüche 1 bis 12, **dadurch gekennzeichnet, dass** die Kupplung (4), insbesondere die Spannbacke (6), weiterhin einen, insbesondere teilkreisförmigen Stützkragen (46) aufweist, der einen Abschnitt eines Kupplungshalses (KH) der Kugelkopf-Anhängerkupplung (K), der dem Basiselement (2) zugewandt ist, umgreift.

14. Lastenheckträger (1) gemäß einem der Ansprüche 1 bis 13, **dadurch gekennzeichnet, dass** zwischen der Spannbacke (6), insbesondere dem Stützkragen (9), und dem Sicherungshebel (10) ein Vorspannelement angeordnet ist, welches den Sicherungshebel (10) in seine zum Kupplungskopf (KK) hin ragende Schwenkposition vorspannt.

## Claims

1. Rear load carrier (1) with a base element (2) and a coupling (4) provided and designed for coupling with a ball hitch (K) of a vehicle, which has a bearing coupling element (6) arranged on the base element (2), preferably in the form of a clamping jaw, and a first expansion coupling element (8), which is movable relative to the bearing coupling element (6), which is designed to clamp a vehicle-mounted ball head (KK) between itself and a bearing coupling element (6) during a coupling process with the vehicle-mounted ball hitch (K), wherein a second expansion coupling element (10), which is mounted movably, preferably pivotably, on the base element (2) or on the coupling (4) and is positioned in relation to the bearing coupling element (6) on the base element (2) or on the coupling (4) such that it can be moved relative to the bearing coupling element (6) into a position engaging below the ball head (KK) during the coupling process, **characterized in that** the first expansion coupling element (8), in the form of a clamp in a tilted position surrounding the ball head (KK), and the second expansion coupling element (10), in the form of a safety lever in a tilted position engaging below the coupling head (KK) at least in sections, are in latching engagement with one another such that the coupling (4) is in a fully coupled state and pivoting of the clamp (8) and/or the safety lever (10) is blocked.

2. Rear load carrier (1) according to claim 1, **characterized in that** the clamp (8) is pivotable about a first pivot axis (S1) and has a first engagement structure (12, 16) for implementing the latching engagement, which is arranged opposite and at a maximum distance from the first pivot axis (51) on the clamp (8).

3. Rear load carrier (1) according to claim 2, **characterized in that** the safety lever (10) has a second engagement structure (14), which is designed to be complementary to the first engagement structure (12, 16).

4. Rear load carrier (1) according to claim 3, **characterized in that** the first engagement structure (12, 16) is designed as a tab (12) protruding from the clamp (8) with a through opening (16), and **in that** the second engagement structure (14) is designed as a hook (14) protruding from the safety lever (10).

5. Rear load carrier (1) according to claim 4, **characterized in that** the hook (14) of the safety lever (10) engages in the through opening (16) on the clamp (8) to implement the latching engagement.

6. Rear load carrier (1) according to any one of claims 3 to 5, **characterized in that** the first engagement structure (12, 16) is arranged on the clamp (8) and the second engagement structure (14) is arranged on the safety lever (10) such that latching engagement between the clamp (8) and the safety element (10) takes place below the ball head (KK).

7. Rear load carrier (1) according to any one of claims 1 to 6, **characterized in that** the inner surface of the clamp (8), which faces the ball head (KK) in its tilted position surrounding the ball head (KK), has at least one, in particular elliptical, recess (44), which rests, in particular completely, against the ball head (KK) in the fully coupled state.

8. Rear load carrier (1) according to any one of claims 1 to 7, **characterized in that** the safety lever (10) has a stop (18), which limits a pivoting movement of the safety lever (10) towards the ball head (KK).

9. Rear load carrier (1) according to any one of claims 1 to 8, **characterized in that** a cover (28) is arranged on the clamp (8), which is non-movably connected to the clamp (8) and, in the tilted position of the clamp (8) surrounding the coupling head (KK), covers a section of the coupling head (KK), which is left free by the clamp (8), in particular above the coupling head (KK).

10. Rear load carrier according to claim 7 and 8 or 9, **characterized in that** the stop (18) of the safety lever (10) rests against the cover (28) in the fully coupled state.

11. Rear load carrier (1) according to any one of claims 1 to 9, **characterized in that** (6) a projection (32) with a through bore (48) for receiving a shaft (20) is provided on the clamping jaw, which pivotably mounts the safety lever (10) on the clamping jaw (6).

12. Rear load carrier (1) according to any one of claims 1 to 11, **characterized in that** the clamping jaw (6) has an, in particular part-spherical or bowl-shaped, ball head-coupling section (22), which is designed to enclose the ball head (KK).

13. Rear load carrier (1) according to any one of claims 1 to 12, **characterized in that** the coupling (4), in particular the clamping jaw (6), further has an, in particular part-circular support collar (46), which surrounds a section of a coupling neck (KH) of the ball hitch (K), which faces the base element (2).

14. Rear load carrier (1) according to any one of claims 1 to 13, **characterized in that** a prestressing element is arranged between the clamping jaw (6), in particular the support collar (9), and the safety lever (10), which pretensions the safety lever (10) in its tilted position projecting towards the coupling head (KK).

## Revendications

1. Porte-charges arrière (1) avec un élément de base (2) et un attelage (4) prévu et conçu pour être couplé à un dispositif d'attelage à rotule (K) d'un véhicule, qui comprend un élément d'attelage à palier (6) disposé sur l'élément de base (2), de préférence sous forme d'une mâchoire de serrage, et un premier élément d'attelage à serrage (8) mobile par rapport à l'élément d'attelage à palier (6) qui, lors d'une opération d'attelage avec le dispositif d'attelage à rotule (K) côté véhicule, est conçu pour serrer une rotule (KK) côté véhicule entre lui-même et l'élément d'attelage à palier (6), dans lequel un second élément d'attelage de serrage (10) est monté de manière mobile, de préférence pivotante, sur l'élément de base (2) ou sur l'attelage (4) et est placé par rapport à l'élément d'attelage à palier (6) sur l'élément de base (2) ou sur l'attelage (4) de sorte qu'il peut être déplacé par rapport à l'élément d'attelage à palier (6) lors de l'opération d'attelage dans une position sous la rotule (KK), **caractérisé en ce que** le premier élément d'attelage à serrage (8) sous forme d'un étrier de serrage dans une position pivotante entourant la rotule (KK) et le second élément d'attelage à serrage (10) sous forme d'un levier de sécurité dans une position pivotante s'engageant au moins par sections sous la rotule (KK) sont en prise l'un avec l'autre, de sorte que l'attelage (4) est dans un état complètement couplé et le pivotement de l'étrier de serrage (8) et/ou du levier de sécurité (10) est bloqué.

2. Porte-charges arrière (1) selon la revendication 1, **caractérisé en ce que** l'étrier de serrage (8) peut pivoter autour d'un premier axe de pivotement (51) et présente, pour réaliser l'enclenchement, une première structure d'enclenchement (12, 16) qui est disposée en vis-à-vis et à une distance maximale du premier axe de pivotement (51) sur l'étrier de serrage (8).

3. Porte-charges arrière (1) selon la revendication 2, **caractérisé en ce que** le levier de sécurité (10) présente une seconde structure d'enclenchement (14) qui est conçue de manière complémentaire à la première structure d'enclenchement (12, 16).

4. Porte-charges arrière (1) selon la revendication 3, **caractérisé en ce que** la première structure d'enclenchement (12, 16) est conçue comme une languette (12) dépassant de l'étrier de serrage (8) avec une ouverture de passage (16), et **en ce que** la seconde structure d'enclenchement (14) est conçue comme un crochet (14) dépassant du levier de sécurité (10).

5. Porte-charges arrière (1) selon la revendication 4, **caractérisé en ce que**, pour réaliser l'enclenchement par encliquetage, le crochet (14) du levier de sécurité (10) s'enclenche dans l'ouverture traversante (16) de l'étrier de serrage (8).

6. Porte-charges arrière (1) selon l'une quelconque des revendications 3 à 5, **caractérisé en ce que** la première structure d'enclenchement (12, 16) est disposée sur l'étrier de serrage (8) et la seconde structure d'enclenchement (14) est disposée sur le levier de sécurité (10) de sorte que l'enclenchement par encliquetage entre l'étrier de serrage (8) et l'élément de sécurité (10) s'effectue sous la rotule (KK).

7. Porte-charges arrière (1) selon l'une quelconque des revendications 1 à 6, **caractérisé en ce que** l'étrier de serrage (8) présente, sur sa surface intérieure qui, dans sa position pivotante entourant la rotule (KK), est tournée vers la rotule (KK), au moins un renfoncement (44), en particulier de forme elliptique qui, à l'état complètement couplé, repose en particulier complètement contre la rotule (KK).

8. Porte-charges arrière (1) selon l'une quelconque des revendications 1 à 7, **caractérisé en ce que** le levier de sécurité (10) présente une butée (18) qui limite le mouvement de pivotement du levier de sécurité (10) vers la rotule (KK).

9. Porte-charges arrière (1) selon l'une quelconque des revendications 1 à 8, **caractérisé en ce qu'**un couvercle (28) est disposé sur l'étrier de serrage (8), qui est connecté de manière fixe à l'étrier de serrage (8) et couvre, dans la position pivotante de l'étrier de serrage (8) entourant la tête d'attelage (KK), une partie de la tête d'attelage (KK) qui est laissée libre par l'étrier de serrage (8), en particulier au-dessus de la tête d'attelage (KK).

10. Porte-charges arrière selon la revendication 7 et 8 ou 9, **caractérisé en ce que** la butée (18) du levier de sécurité (10) repose contre le couvercle (28) à l'état complètement couplé.

11. Porte-charges arrière (1) selon l'une quelconque des revendications 1 à 9, **caractérisé en ce qu'**une saillie (32) avec alésage traversant (48) est prévue sur la mâchoire de serrage (6) pour loger un arbre (20) qui supporte le levier de sécurité (10) de manière pivotante sur la mâchoire de serrage (6).

12. Porte-charges arrière (1) selon l'une quelconque des revendications 1 à 11, **caractérisé en ce que** la mâchoire de serrage (6) présente une section d'attelage à rotule (22), en particulier partiellement sphérique ou en forme de coque, qui est conçue pour entourer la rotule (KK).

13. Porte-charges arrière (1) selon l'une quelconque des revendications 1 à 12, **caractérisé en ce que** l'attelage (4), en particulier la mâchoire de serrage (6), présente en outre une collerette d'appui (46), en particulier de forme partiellement circulaire, qui entoure une section d'un col d'attelage (KH) du dispositif d'attelage à rotule (K) qui est tournée vers l'élément de base (2).

14. Porte-charge arrière (1) selon l'une quelconque des revendications 1 à 13, **caractérisé en ce qu'**un élément de précontrainte est disposé entre la mâchoire de serrage (6), en particulier la collerette d'appui (9), et le levier de sécurité (10), lequel précontraint le levier de sécurité (10) dans sa position pivotante en saillie vers la tête d'attelage (KK).
